(19) **Europäisches Patentamt / European Patent Office / Office européen des brevets**

(11) **EP 4 598 169 A1**

(12) **EUROPEAN PATENT APPLICATION**
published in accordance with Art. 153(4) EPC

(43) Date of publication:
06.08.2025 Bulletin 2025/32

(21) Application number: 23873173.1

(22) Date of filing: 27.09.2023

(51) International Patent Classification (IPC):
H04W 64/00 (2009.01)   H04L 5/00 (2006.01)
H04W 24/08 (2009.01)   H04W 24/10 (2009.01)
G01S 5/02 (2010.01)   H04W 92/18 (2009.01)

(52) Cooperative Patent Classification (CPC):
G01S 5/02; H04L 5/00; H04W 24/08; H04W 24/10;
H04W 64/00; H04W 92/18

(86) International application number:
PCT/KR2023/014948

(87) International publication number:
WO 2024/072062 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.09.2022   US 202263410585 P
27.09.2022   US 202263410592 P

(71) Applicant: LG Electronics Inc.
Yeongdeungpo-gu
Seoul 07336 (KR)

(72) Inventors:
• KO, Woosuk
  Seoul 06772 (KR)
• SEO, Hanbyul
  Seoul 06772 (KR)
• LEE, Seungmin
  Seoul 06772 (KR)

(74) Representative: Mooser, Sebastian Thomas
Wuesthoff & Wuesthoff
Patentanwälte und Rechtsanwalt PartG mbB
Schweigerstraße 2
81541 München (DE)

(54) **METHOD AND DEVICE FOR JOINT POSITIONING BASED ON SL AND UU LINK**

(57)    Provided are a method for a first device to communicate wirelessly and a device for supporting same. The method may comprise the steps of: acquiring configuration information related to a downlink (DL) positioning reference signal (PRS); acquiring configuration information related to a sidelink (SL) PRS; acquiring information related to the minimum number of devices for joint positioning; and performing the joint positioning with at least one device on the basis of (i) the DL PRS, (ii) the SL PRS, and (iii) the information related to the minimum number of devices for joint positioning.

FIG. 16

**Description**

**TECHNICAL FIELD**

This disclosure relates to a wireless communication system.

**BACKGROUND ART**

Sidelink (SL) communication is a communication scheme in which a direct link is established between User Equipments (UEs) and the UEs exchange voice and data directly with each other without intervention of a base station. SL communication is under consideration as a solution to the overhead of a base station caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

**DISCLOSURE**

**TECHNICAL SOLUTION**

In one embodiment, provided is a method for performing wireless communication by a first device. The method may comprise: obtaining configuration information related to a downlink (DL) positioning reference signal (PRS); obtaining configuration information related to a sidelink (SL) PRS; obtaining information related to a minimum number of devices for a joint positioning; and performing the joint positioning with at least one device based on (i) the DL PRS, (ii) the SL PRS, and (iii) the information related to the minimum number of devices for the joint positioning.

In one embodiment, provided is a first device configured to perform wireless communication. The first device may comprise: at least one transceiver; at least one processor; and at least one memory connected to the at least one processor and storing instructions. For example, the instructions, based on being executed by the at least one processor, cause the first device to perform operations comprising: obtaining configuration information related to a downlink (DL) positioning reference signal (PRS); obtaining configuration information related to a sidelink (SL) PRS; obtaining information related to a minimum number of devices for a joint positioning; and performing the joint positioning with at least one device based on (i) the DL PRS, (ii) the SL PRS, and (iii) the information related to the minimum number of devices for the joint positioning.

In one embodiment, provided is a processing device configured to control a first device. The processing device may comprise: at least one processor; and at least one memory connected to the at least one processor and storing instructions. For example, the instructions, based on being executed by the at least one processor, cause the first device to perform operations comprising: obtaining configuration information related to a downlink (DL) positioning reference signal (PRS); obtaining configuration information related to a sidelink (SL) PRS; obtaining information related to a minimum number of devices for a joint positioning; and performing the joint positioning with at least one device based on (i) the DL PRS, (ii) the SL PRS, and (iii) the information related to the minimum number of devices for the joint positioning.

In one embodiment, provided is a non-transitory computer-readable storage medium recording instructions. For example, the instructions, based on being executed, cause a first device to perform operations comprising: obtaining configuration information related to a downlink (DL) positioning reference signal (PRS); obtaining configuration information related to a sidelink (SL) PRS; obtaining information related to a minimum number of devices for a joint positioning; and performing the joint positioning with at least one device based on (i) the DL PRS, (ii) the SL PRS, and (iii) the information related to the minimum number of devices for the joint positioning.

**BRIEF DESCRIPTION OF THE DRAWINGS**

FIG. 1 shows a communication structure that can be provided in the 6G system, based on an embodiment of the present disclosure.

FIG. 2 shows an electromagnetic spectrum, based on an embodiment of the present disclosure.

FIG. 3 shows a structure of an NR system, based on an embodiment of the present disclosure.

FIG. 4 shows a radio protocol architecture, based on an embodiment of the present disclosure.

FIG. 5 shows a structure of a radio frame of an NR, based on an embodiment of the present disclosure.

FIG. 6 shows a structure of a slot of an NR frame, based on an embodiment of the present disclosure.

FIG. 7 shows an example of a BWP, based on an embodiment of the present disclosure.

FIG. 8 shows a procedure of performing V2X or SL communication by a UE based on a transmission mode, based on an embodiment of the present disclosure.

FIG. 9 shows an example of an architecture of a 5G system capable of positioning a UE having access to a next generation-radio access network (NG-RAN) or an E-UTRAN, based on an embodiment of the present disclosure.

FIG. 10 shows an example of implementing a network for measuring a location of a UE, based on an embodiment of the present disclosure.

FIG. 11 shows an example of a protocol layer used to support LTE positioning protocol (LPP) message transmission between an LMF and a UE, based on an embodiment of the present disclosure.

FIG. 12 shows an example of a protocol layer used to support NR positioning protocol A (NRPPa) PDU transmission between an LMF and an NG-RAN node, based on an embodiment of the present disclosure.

FIG. 13 is a drawing for explaining an OTDOA positioning method, based on an embodiment of the present disclosure.

FIG. 14 is a drawing for explaining a double-side round trip time (RTT), based on an embodiment of the present disclosure.

FIG. 15 shows a joint positioning operation, based on an embodiment of the present disclosure.

FIG. 16 shows a method for performing wireless communication by a first device, based on an embodiment of the present disclosure.

FIG. 17 shows a method for performing wireless communication by a second device, based on an embodiment of the present disclosure.

FIG. 18 shows a communication system 1, based on an embodiment of the present disclosure.

FIG. 19 shows wireless devices, based on an embodiment of the present disclosure.

FIG. 20 shows a signal process circuit for a transmission signal, based on an embodiment of the present disclosure.

FIG. 21 shows another example of a wireless device, based on an embodiment of the present disclosure.

FIG. 22 shows a hand-held device, based on an embodiment of the present disclosure.

FIG. 23 shows a vehicle or an autonomous vehicle, based on an embodiment of the present disclosure.

## MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

The 6G (wireless communication) system is aimed at (i) very high data rates per device, (ii) a very large number of connected devices, (iii) global connectivity, (iv) very low latency, (v) lower energy consumption for battery-free IoT devices, (vi) ultra-reliable connectivity, and (vii) connected intelligence with machine learning capabilities. The vision of the 6G system can have four aspects: intelligent connectivity, deep connectivity, holographic connectivity, and ubiquitous connectivity, and the 6G system can satisfy the requirements as shown in Table 1 below. In other words, Table 1 is an example of the requirements of a 6G system.

[Table 1]

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

6G systems can have key elements such as enhanced mobile broadband (eMBB), ultra-reliable low latency communications (URLLC), massive machine-to-machine communications (mMTC), AI-integrated communications, tactile internet, high throughput, high network capacity, high energy efficiency, low backhaul and access network congestion, and enhanced data security.

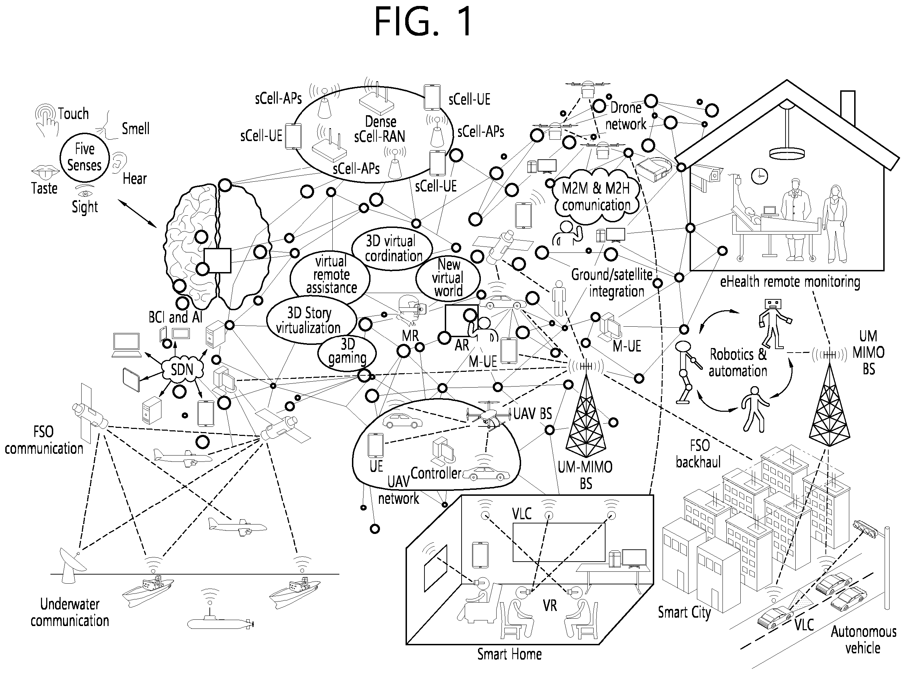

FIG. 1 shows a communication structure that can be provided in the 6G system, based on an embodiment of the present disclosure. The embodiment of FIG. 1 may be combined with various embodiments of the present disclosure.

6G systems are expected to have 50 times higher simultaneous radio connectivity than 5G radio systems. URLLC, a key feature of 5G, will become a more dominant technology in 6G communications, providing end-to-end delay of less than 1 ms. 6G systems will have much better volumetric spectral efficiency as opposed to the more commonly used area spectral efficiency. 6G systems will be able to offer very long battery life and advanced battery technologies for energy harvesting, so mobile devices will not need to be charged separately in a 6G system. New network characteristics in 6G may include the following.

- Satellites integrated network: In order to provide a global mobile population, 6G is expected to be integrated with satellites. The integration of terrestrial, satellite, and airborne networks into a single wireless communication system is critical to 6G.

- Connected intelligence: Unlike previous generations of wireless communication systems, 6G is revolutionary and will update the wireless evolution from "connected things" to "connected intelligence". AI can be applied at each step of the communication process (or each step of signal processing, as we will see later).

- Seamless integration wireless information and energy transfer: 6G wireless networks will transfer power to charge the batteries of devices such as smartphones and sensors. Therefore, wireless information and energy transfer (WIET) will be integrated.

- Ubiquitous super 3D connectivity: Access to networks and core network functions from drones and very low Earth orbit satellites will make super 3D connectivity ubiquitous in 6G.

From the above new network characteristics of 6G, some common requirements may include.

- Small cell networks: The idea of small cell networks was introduced in cellular systems to improve the received signal quality as a result of improved throughput, energy efficiency, and spectral efficiency. As a result, small cell networks are an essential characteristic for 5G and beyond 5G (5GB) communication systems. Therefore, 6G communication systems will also adopt the characteristics of small cell networks.
- Ultra-dense heterogeneous network: Ultra-dense heterogeneous networks will be another important characteristic of 6G communication systems. Multi-tier networks composed of heterogeneous networks will improve overall QoS and reduce costs.
- High-capacity backhaul: Backhaul connectivity is characterized by high-capacity backhaul networks to support large volumes of traffic. High-speed fiber optics and free-space optics (FSO) systems can be a possible solution to this problem.
- Radar technology integrated with mobile technology: High-precision localization (or location-based services) through communication is one of the features of 6G wireless communication systems. Therefore, radar systems will be integrated with 6G networks.
- Softwarization and virtualization: Softwarization and virtualization are two important features that are fundamental to the design process in a 5GB network to ensure flexibility, reconfigurability, and programmability. In addition, billions of devices may be shared on a shared physical infrastructure.

The following describes the key enabling technologies for 6G systems.

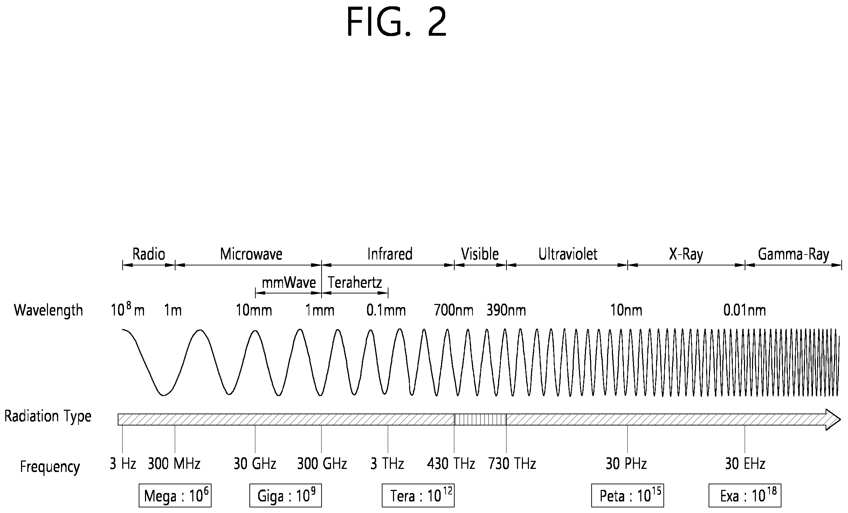

- Artificial Intelligence: The most important and new technology to be introduced in the 6G system is AI. The 4G system did not involve AI. 5G systems will support partial or very limited AI. However, 6G systems will be AI-enabled for full automation. Advances in machine learning will create more intelligent networks for real-time communication in 6G. The introduction of AI in telecommunications can streamline and improve real-time data transfer. AI can use numerous analytics to determine how complex target tasks are performed, meaning AI can increase efficiency and reduce processing delays. Time-consuming tasks such as handover, network selection, and resource scheduling can be done instantly by using AI. AI can also play an important role in M2M, machine-to-human, and human-to-machine communications. In addition, AI can be a rapid communication in Brain Computer Interface (BCI). AI-based communication systems can be supported by metamaterials, intelligent structures, intelligent networks, intelligent devices, intelligent cognitive radios, self-sustaining wireless networks, and machine learning
- THz Communication (Terahertz Communication): Data rates can be increased by increasing bandwidth. This can be accomplished by using sub-THz communication with a wide bandwidth and applying advanced massive MIMO technology. THz waves, also known as submillimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. Of the defined THz band, 300 GHz-3 THz is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 illustrates an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies, for which highly directive antennas are indispensable. The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO Technology (Large-scale MIMO)
- Hologram Beamforming (HBF, Hologram Bmeaforming)
- Optical wireless technology
- Free-space optical transmission backhaul network (FSO Backhaul Network)
- Non-Terrestrial Networks (NTN)
- Quantum Communication
- Cell-free Communication
- Integration of Wireless Information and Power Transmission

- Integration of Wireless Communication and Sensing
- Integrated Access and Backhaul Network
- Big data Analysis
- Reconfigurable Intelligent Surface (Reconfigurable Intelligent Surface)
- Metaverse
- Block-chain
- Unmanned aerial vehicles (UAVs): Unmanned aerial vehicles (UAVs) or drones will be an important component of 6G wireless communications. In most cases, high-speed data wireless connectivity will be provided using UAV technology. BS entities are installed on UAVs to provide cellular connectivity. UAVs have certain features not found in fixed BS infrastructure, such as easy deployment, strong line-of-sight links, and controlled degrees of freedom for mobility. During emergencies, such as natural disasters, the deployment of terrestrial telecom infrastructure is not economically feasible and sometimes cannot provide services in volatile environments. UAVs can easily handle these situations. UAVs will be a new paradigm in wireless communications. This technology facilitates the three basic requirements of wireless networks, which are eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Autonomous Driving (Autonomous Driving, Self-driving): For complete autonomous driving, vehicle-to-vehicle communication is required to inform each other of dangerous situations, and vehicle-to-vehicle communication with infrastructure such as parking lots and traffic lights is required to check information such as the location of parking information and signal change times. Vehicle to Everything (V2X), a key element in building an autonomous driving infrastructure, is a technology that enables vehicles to communicate and share information with various elements on the road, such as vehicle-to-vehicle (V2V) and vehicle-to-infrastructure (V2I) wireless communication, in order to perform autonomous driving. In order to maximize the performance of autonomous driving and ensure high safety, fast transmission speeds and low latency technologies are essential. In addition, in the future, autonomous driving will go beyond delivering warnings or guidance messages to the driver to actively intervene in vehicle operation and directly control the vehicle in dangerous situations, so the amount of information that needs to be transmitted and received will be vast, and 6G is expected to maximize autonomous driving with faster transmission speeds and lower latency than 5G.

For clarity of description, 5G NR is mainly described, but the technical idea according to an embodiment of the present disclosure is not limited thereto. Various embodiments of the present disclosure may also be applied to a 6G communication system

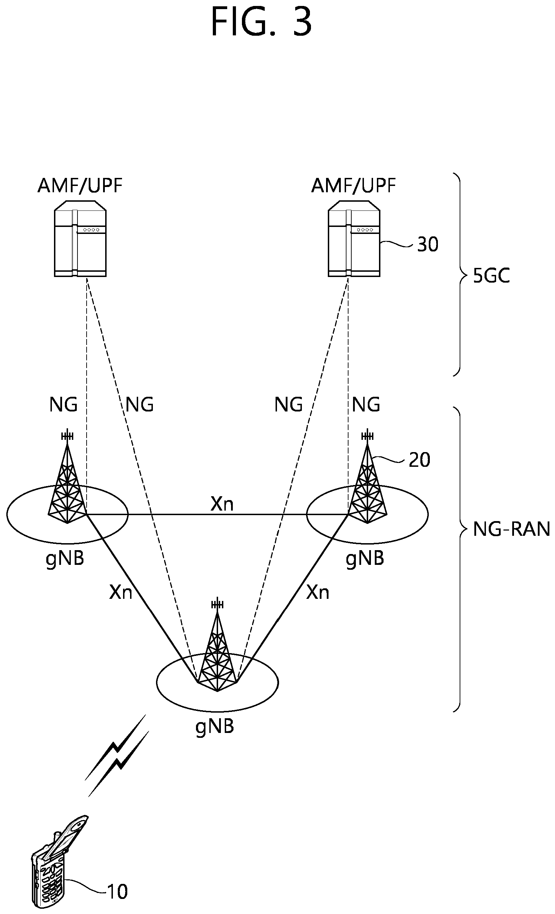

FIG. 3 shows a structure of an NR system, based on an embodiment of the present disclosure. The embodiment of FIG. 3 may be combined with various embodiments of the present disclosure.

Referring to FIG. 3, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 3 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

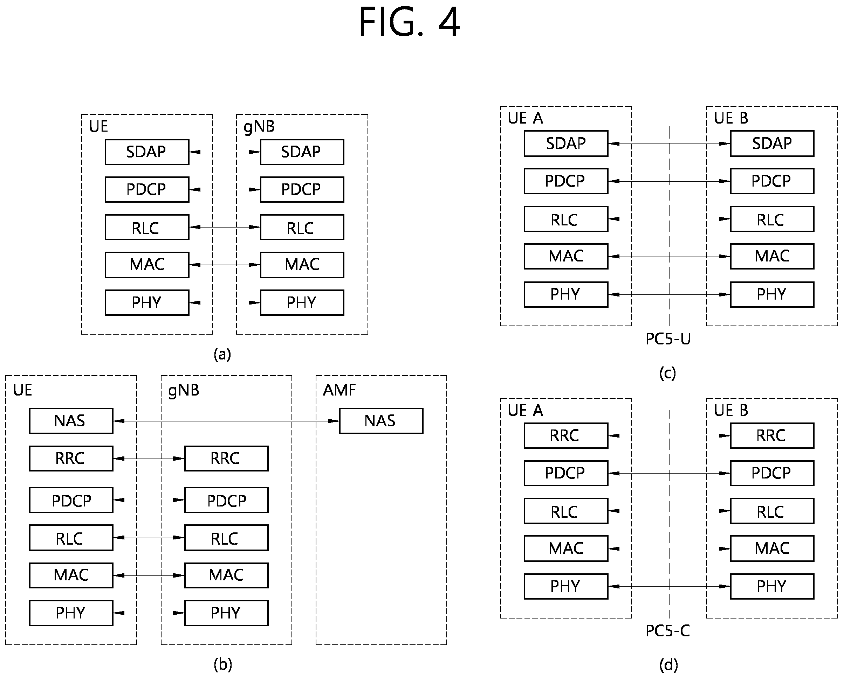

FIG. 4 shows a radio protocol architecture, based on an embodiment of the present disclosure. The embodiment of FIG. 4 may be combined with various embodiments of the present disclosure. Specifically, (a) of FIG. 4 shows a radio protocol stack of a user plane for Uu communication, and (b) of FIG. 4 shows a radio protocol stack of a control plane for Uu communication. (c) of FIG. 4 shows a radio protocol stack of a user plane for SL communication, and (d) of FIG. 4 shows a radio protocol stack of a control plane for SL communication.

Referring to FIG. 4, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC INACTIVE state is additionally defined, and a UE being in the RRC INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

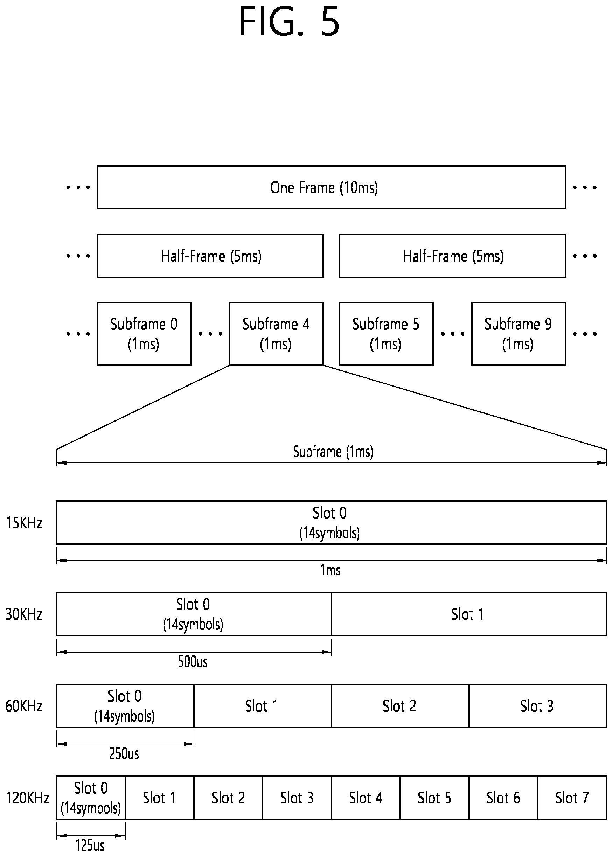

FIG. 5 shows a structure of a radio frame of an NR, based on an embodiment of the present disclosure. The embodiment of FIG. 5 may be combined with various embodiments of the present disclosure.

Referring to FIG. 5, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 2 shown below represents an example of a number of symbols per slot ($N^{slot}_{symb}$), a number slots per frame ($N^{frame,u}_{slot}$), and a number of slots per subframe ($N^{subftame,u}_{slot}$) based on an SCS configuration (u), in a case where a normal CP or extended CP is used.

[Table 2]

| CP type | SCS (15*2") | $N^{slot}_{symb}$ | $N^{frame,u}_{slot}$ | $N^{subframe,u}_{slot}$ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

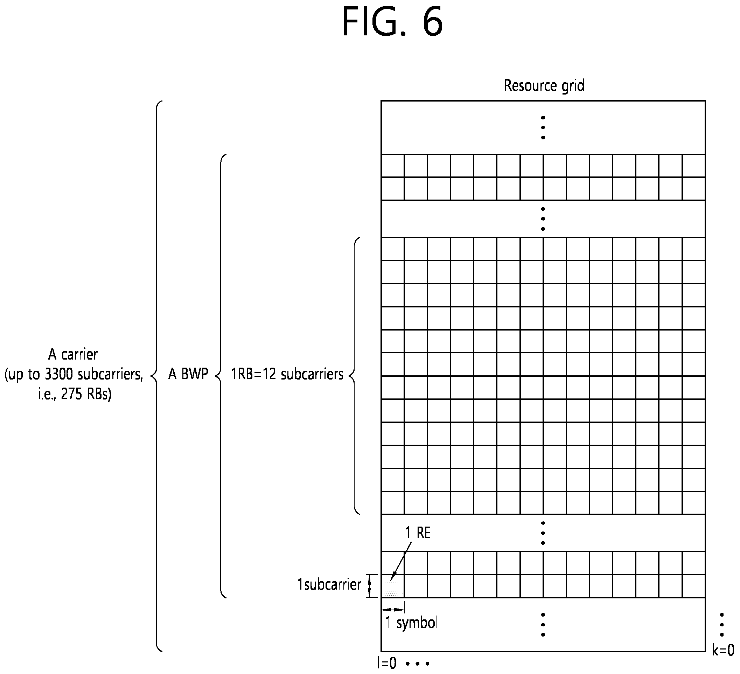

FIG. 6 shows a structure of a slot of an NR frame, based on an embodiment of the present disclosure. The embodiment of FIG. 6 may be combined with various embodiments of the present disclosure.

Referring to FIG. 6, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit a SL channel or a SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

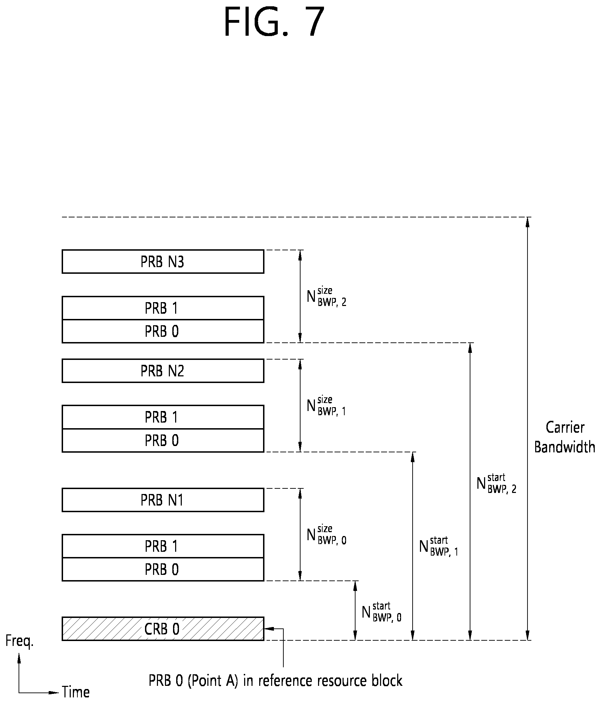

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{stan}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

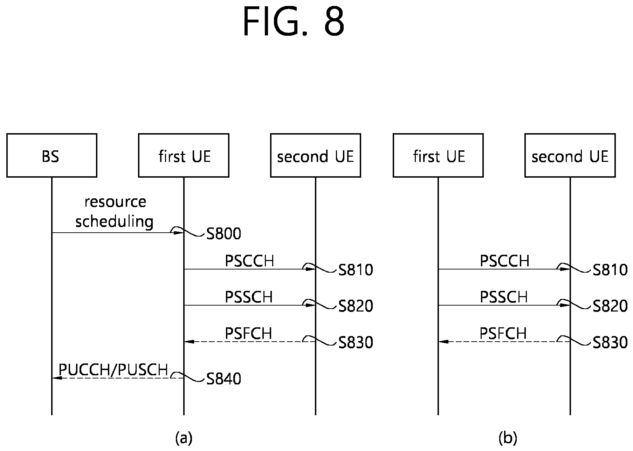

FIG. 8 shows a procedure of performing V2X or SL communication by a UE based on a transmission mode, based on an embodiment of the present disclosure. The embodiment of FIG. 8 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 8 shows a UE operation related to an LTE transmission mode 1 or an LTE transmission mode 3. Alternatively, for example, (a) of FIG. 8 shows a UE operation related to an NR resource allocation mode 1. For example, the LTE transmission mode 1 may be applied to general SL communication, and the LTE transmission mode 3 may be applied to V2X communication.

For example, (b) of FIG. 8 shows a UE operation related to an LTE transmission mode 2 or an LTE transmission mode 4. Alternatively, for example, (b) of FIG. 8 shows a UE operation related to an NR resource allocation mode 2.

Referring to (a) of FIG. 8, in the LTE transmission mode 1, the LTE transmission mode 3, or the NR resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Hereinafter, an example of DCI format 3_0 will be described.

DCI format 3_0 is used for scheduling of NR PSCCH and NR PSSCH in one cell.

The following information is transmitted by means of the DCI format 3_0 with CRC scrambled by SL-RNTI or SL-CS-RNTI:

- Resource pool index - ceiling ($\log_2$ I) bits, where I is the number of resource pools for transmission configured by the higher layer parameter sl-TxPoolScheduling.
- Time gap - 3 bits determined by higher layer parameter sl-DCI-ToSL-Trans
- HARQ process number - 4 bits
- New data indicator - 1 bit
- Lowest index of the subchannel allocation to the initial transmission - ceiling ($\log_2(N^{SL}_{subChannel})$) bits
- SCI format 1-A fields: frequency resource assignment, time resource assignment
- PSFCH-to-HARQ feedback timing indicator - ceiling ($\log_2 N_{fb\_timing}$) bits, where $N_{fb\_timing}$ is the number of entries in the higher layer parameter sl-PSFCH-ToPUCCH.
- PUCCH resource indicator - 3 bits
- Configuration index - 0 bit if the UE is not configured to monitor DCI format 3_0 with CRC scrambled by SL-CS-RNTI; otherwise 3 bits. If the UE is configured to monitor DCI format 3_0 with CRC scrambled by SL-CS-RNTI, this field is reserved for DCI format 3_0 with CRC scrambled by SL-RNTI.
- Counter sidelink assignment index - 2 bits, 2 bits if the UE is configured with pdsch-HARQ-ACK-Codebook = dynamic, 2 bits if the UE is configured with pdsch-HARQ-ACK-Codebook = semi-static
- Padding bits, if required

Referring to (b) of FIG. 8, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format. For example, the 1st-stage SCI format may include a SCI format 1-A, and the 2nd-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:

- Priority - 3 bits
- Frequency resource assignment - ceiling $(\log_2(N^{SL}_{subChannel}(N^{SL}_{subChannel}+1)/2))$ bits when the value of the higher layer parameter sl-MaxNumPerReserve is configured to 2; otherwise ceiling $\log_2(N^{SL}_{subChannel}(N^{SL}_{subChannel}+1)(2N^{SL}_{subChannel}+1)/6)$ bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling $(\log_2 N_{rsv\_period})$ bits, where $N_{rsv\_period}$ is the number of entries in the higher layer parameter sl-ResourceReservePeriodList, if higher layer parameter sl-MultiReserveResource is configured; 0 bit otherwise
- DMRS pattern - ceiling $(\log_2 N_{pattern})$ bits, where $N_{pattern}$ is the number of DMRS patterns configured by higher layer parameter sl-PSSCH-DMRS-TimePatternList
- 2nd-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

[Table 5]

| Value of 2nd-stage SCI format field | 2nd-stage SCI format |
|---|---|
| 00 | SCI format 2-A |
| 01 | SCI format 2-B |
| 10 | Reserved |
| 11 | Reserved |

[Table 6]

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

[Table 7]

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

Hereinafter, a hybrid automatic repeat request (HARQ) procedure will be described.

For example, the SL HARQ feedback may be enabled for unicast. In this case, in a non-code block group (non-CBG) operation, if the receiving UE decodes a PSCCH of which a target is the receiving UE and if the receiving UE successfully decodes a transport block related to the PSCCH, the receiving UE may generate HARQ-ACK. In addition, the receiving UE may transmit the HARQ-ACK to the transmitting UE. Otherwise, if the receiving UE cannot successfully decode the transport block after decoding the PSCCH of which the target is the receiving UE, the receiving UE may generate the HARQ-NACK. In addition, the receiving UE may transmit HARQ-NACK to the transmitting UE.

For example, the SL HARQ feedback may be enabled for groupcast. For example, in the non-CBG operation, two HARQ feedback options may be supported for groupcast.

(1) Groupcast option 1: After the receiving UE decodes the PSCCH of which the target is the receiving UE, if the receiving UE fails in decoding of a transport block related to the PSCCH, the receiving UE may transmit HARQ-NACK to the transmitting UE through a PSFCH. Otherwise, if the receiving UE decodes the PSCCH of which the target is the receiving UE and if the receiving UE successfully decodes the transport block related to the PSCCH, the receiving UE may not transmit the HARQ-ACK to the transmitting UE.

(2) Groupcast option 2: After the receiving UE decodes the PSCCH of which the target is the receiving UE, if the receiving UE fails in decoding of the transport block related to the PSCCH, the receiving UE may transmit HARQ-NACK to the transmitting UE through the PSFCH. In addition, if the receiving UE decodes the PSCCH of which the target is the receiving UE and if the receiving UE successfully decodes the transport block related to the PSCCH, the receiving UE may transmit the HARQ-ACK to the transmitting UE through the PSFCH.

For example, if the groupcast option 1 is used in the SL HARQ feedback, all UEs performing groupcast communication may share a PSFCH resource. For example, UEs belonging to the same group may transmit HARQ feedback by using the same PSFCH resource.

For example, if the groupcast option 2 is used in the SL HARQ feedback, each UE performing groupcast communication may use a different PSFCH resource for HARQ feedback transmission. For example, UEs belonging to the same group may transmit HARQ feedback by using different PSFCH resources.

In the present disclosure, HARQ-ACK may be referred to as ACK, ACK information, or positive-ACK information, and HARQ-NACK may be referred to as NACK, NACK information, or negative-ACK information.

Hereinafter, positioning will be described.

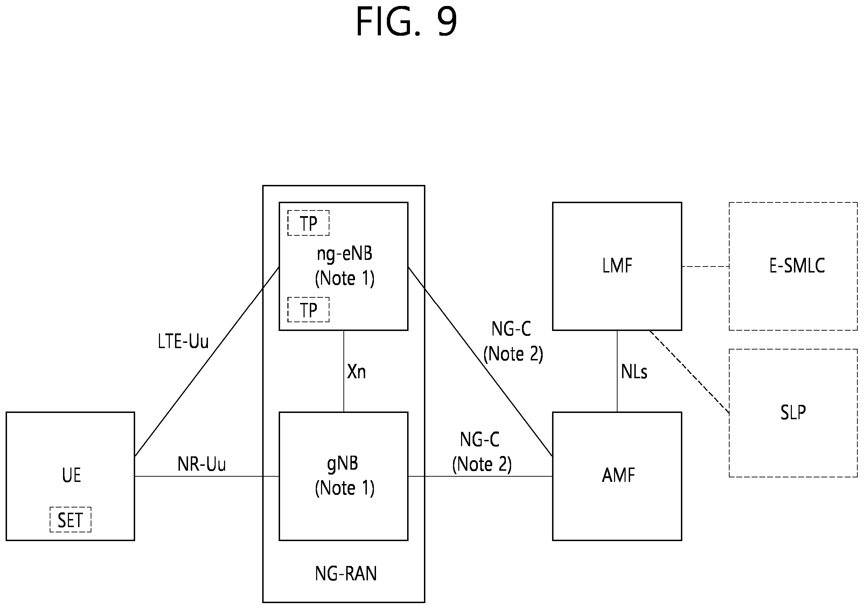

FIG. 9 shows an example of an architecture of a 5G system capable of positioning a UE having access to a next generation-radio access network (NG-RAN) or an E-UTRAN based on an embodiment of the present disclosure. The embodiment of FIG. 9 may be combined with various embodiments of the present disclosure.

Referring to FIG. 9, an AMF may receive a request for a location service related to a specific target UE from a different entity such as a gateway mobile location center (GMLC), or may determine to start the location service in the AMF itself instead of the specific target UE. Then, the AMF may transmit a location service request to a location management function (LMF). Upon receiving the location service request, the LMF may process the location service request and return a processing request including an estimated location or the like of the UE to the AMF. Meanwhile, if the location service request is received from the different entity such as GMLC other than the AMF, the AMF may transfer to the different entity the processing request received from the LMF.

A new generation evolved-NB (ng-eNB) and a gNB are network elements of NG-RAN capable of providing a measurement result for location estimation, and may measure a radio signal for a target UE and may transfer a resultant value to the LMF. In addition, the ng-eNB may control several transmission points (TPs) such as remote radio heads or PRS-dedicated TPs supporting a positioning reference signal (PRS)-based beacon system for E-UTRA.

The LMF may be connected to an enhanced serving mobile location centre (E-SMLC), and the E-SMLC may allow the LMF to access E-UTRAN. For example, the E-SMLC may allow the LMF to support observed time difference of arrival (OTDOA), which is one of positioning methods of E-UTRAN, by using downlink measurement obtained by a target UE through a signal transmitted from the gNB and/or the PRS-dedicated TPs in the E-UTRAN.

Meanwhile, the LMF may be connected to an SUPL location platform (SLP). The LMF may support and manage different location determining services for respective target UEs. The LMF may interact with a serving ng-eNB or serving gNB for the target UE to obtain location measurement of the UE. For positioning of the target UE, the LMF may determine a positioning method based on a location service (LCS) client type, a requested quality of service (QoS), UE positioning capabilities, gNB positioning capabilities, and ng-eNB positioning capabilities, or the like, and may apply such a positioning method to the serving gNB and/or the serving ng-eNB. In addition, the LMF may determine additional information such as a location estimation value for the target UE and accuracy of location estimation and speed. The SLP is a secure user plane location (SUPL) entity in charge of positioning through a user plane.

The UE may measure a downlink signal through NG-RAN, E-UTRAN, and/or other sources such as different global navigation satellite system (GNSS) and terrestrial beacon system (TBS), wireless local access network (WLAN) access points, Bluetooth beacons, UE barometric pressure sensors or the like. The UE may include an LCS application. The UE may communicate with a network to which the UE has access, or may access the LCS application through another application included in the UE. The LCS application may include a measurement and calculation function required to determine a location of the UE. For example, the UE may include an independent positioning function such as a global positioning system (GPS), and may report the location of the UE independent of NG-RAN transmission. Positioning information obtained independently as such may be utilized as assistance information of the positioning information obtained from the network.

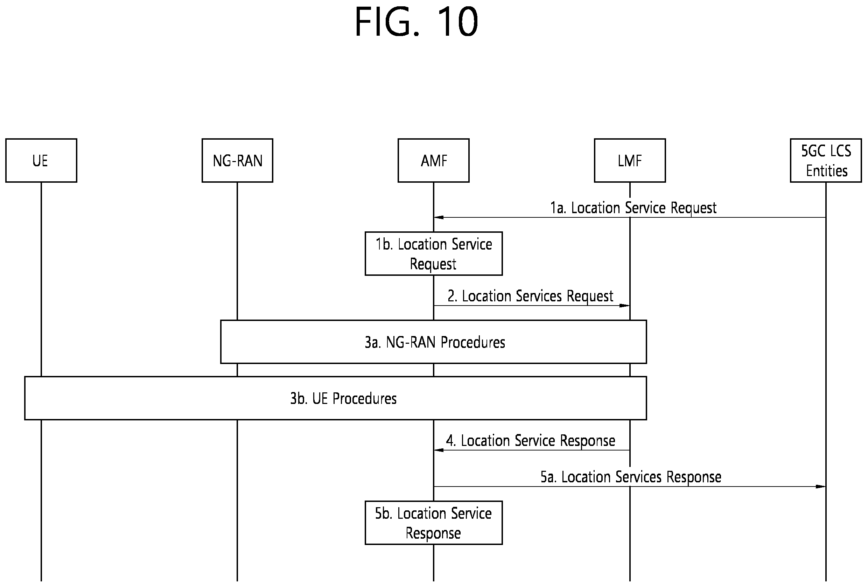

FIG. 10 shows an example of implementing a network for measuring a location of a UE based on an embodiment of the present disclosure. The embodiment of FIG. 10 may be combined with various embodiments of the present disclosure.

When the UE is in a connection management (CM)-IDLE state, if an AMF receives a location service request, the AMF may establish a signaling connection with the UE, and may request for a network trigger service to allocate a specific serving gNB or ng-eNB. Such an operational process is omitted in FIG. 10. That is, it may be assumed in FIG. 10 that the UE is in a connected mode. However, due to signaling and data inactivation or the like, the signaling connection may be released by NG-RAN while a positioning process is performed.

A network operation process for measuring a location of a UE will be described in detail with reference to FIG. 10.

In step a1, a 5GC entity such as GMLC may request a serving AMF to provide a location service for measuring a location of a target UE. However, even if the GMLC does not request for the location service, based on step 1b, the serving AMF may determine that the location service for measuring the location of the target UE is required. For example, to measure the location of the UE for an emergency call, the serving AMF may determine to directly perform the location service.

Thereafter, the AMF may transmit the location service request to an LMF based on step 2, and the LMF may start location procedures to obtain location measurement data or location measurement assistance data together with a serving ng-eNB and a serving gNB. Additionally, based on step 3b, the LMF may start location procedures for downlink positioning together with the UE. For example, the LMF may transmit assistance data defined in 3GPP TS 36.355, or may obtain a location estimation value or a location measurement value. Meanwhile, step 3b may be performed additionally after step 3a is performed, or may be performed instead of step 3a.

In step 4, the LMF may provide a location service response to the AMF. In addition, the location service response may include information on whether location estimation of the UE is successful and a location estimation value of the UE. Thereafter, if the procedure of FIG. 10 is initiated by step a1, the AMF may transfer the location service response to a 5GC entity such as GMLC, and if the procedure of FIG. 10 is initiated by step 1b, the AMF may use the location service response to provide a location service related to an emergency call or the like.

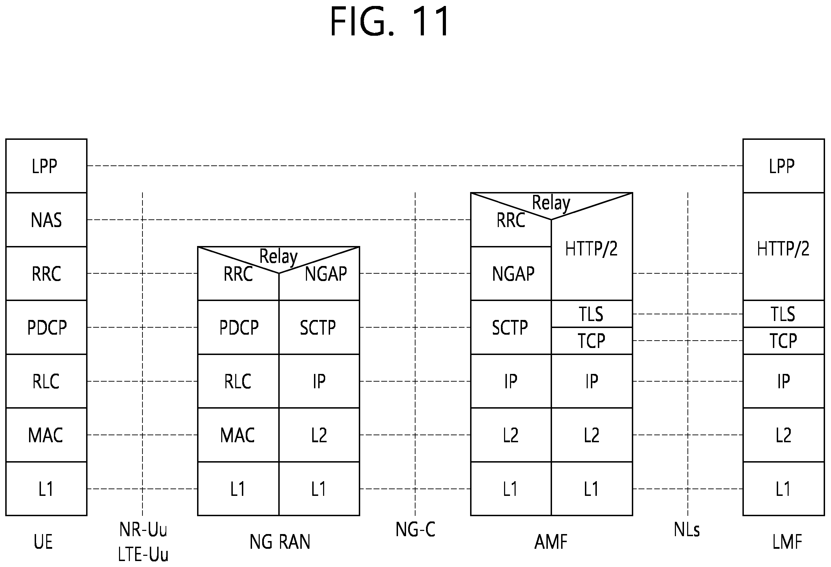

FIG. 11 shows an example of a protocol layer used to support LTE positioning protocol (LPP) message transmission between an LMF and a UE based on an embodiment of the present disclosure. The embodiment of FIG. 11 may be combined with various embodiments of the present disclosure.

An LPP PDU may be transmitted through a NAS PDU between an AMF and the UE. Referring to FIG. 11, an LPP may be terminated between a target device (e.g., a UE in a control plane or an SUPL enabled terminal (SET) in a user plane) and a location server (e.g., an LMF in the control plane and an SLP in the user plane). The LPP message may be transferred in a form of a transparent PDU through an intermediary network interface by using a proper protocol such as an NG application protocol (NGAP) through an NG-control plane (NG-C) interface and NAS/RRC or the like through an NR-Uu interface. The LPP protocol may enable positioning for NR and LTE by using various positioning methods.

For example, based on the LPP protocol, the target device and the location server may exchange mutual capability information, assistance data for positioning, and/or location information. In addition, an LPP message may be used to indicate exchange of error information and/or interruption of the LPP procedure.

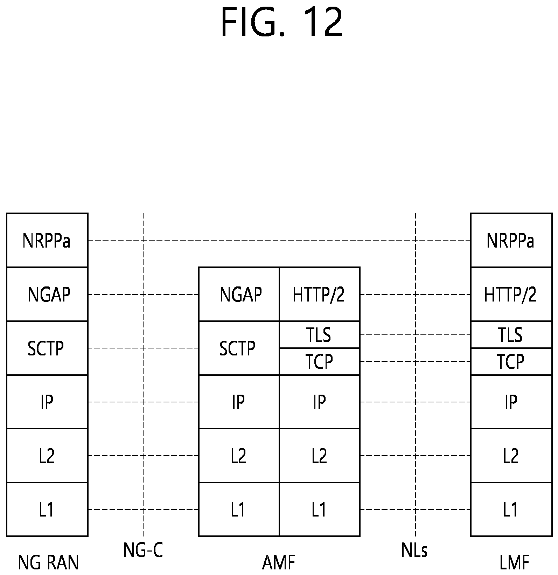

FIG. 12 shows an example of a protocol layer used to support NR positioning protocol A (NRPPa) PDU transmission between an LMF and an NG-RAN node based on an embodiment of the present disclosure. The embodiment of FIG. 12 may be combined with various embodiments of the present disclosure.

The NRPPa may be used for information exchange between the NG-RAN node and the LMF. Specifically, the NRPPa may exchange an enhanced-cell ID (E-CID) for measurement, data for supporting an OTDOA positioning method, and a cell-ID, cell location ID, or the like for an NR cell ID positioning method, transmitted from the ng-eNB to the LMF. Even if there is no information on an associated NRPPa transaction, the AMF may route NRPPa PDUs based on a routing ID of an associated LMR through an NG-C interface.

A procedure of an NRPPa protocol for location and data collection may be classified into two types. A first type is a UE associated procedure for transferring information on a specific UE (e.g., location measurement information or the like), and a second type is a non UE associated procedure for transferring information (e.g., gNB/ng-eNB/TP timing information, etc.) applicable to an NG-RAN node and associated TPs. The two types of the procedure may be independently supported or may be simultaneously supported.

Meanwhile, examples of positioning methods supported in NG-RAN may include GNSS, OTDOA, enhanced cell ID (E-CID), barometric pressure sensor positioning, WLAN positioning, Bluetooth positioning and terrestrial beacon system (TBS), uplink time difference of arrival (UTDOA), etc.

(1) OTDOA (Observed Time Difference Of Arrival)

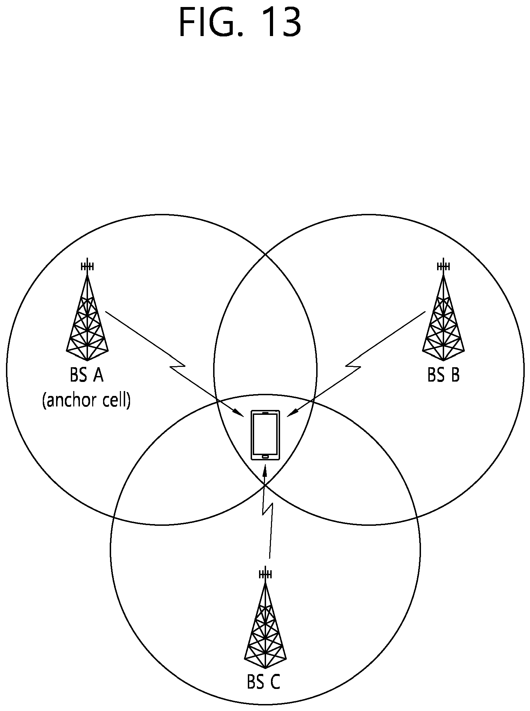

FIG. 13 is a drawing for explaining an OTDOA positioning method based on an embodiment of the present disclosure. The embodiment of FIG. 13 may be combined with various embodiments of the present disclosure.

The OTDOA positioning method uses measurement timing of downlink signals received by a UE from an eNB, an ng-eNB, and a plurality of TPs including a PRS-dedicated TP. The UE measures timing of downlink signals received by using location assistance data received from a location server. In addition, a location of the UE may be determined based on such a measurement result and geometric coordinates of neighboring TPs.

A UE connected to a gNB may request for a measurement gap for OTDOA measurement from the TP. If the UE cannot recognize a single frequency network (SFN) for at least one TP in the OTDOA assistance data, the UE may use an autonomous gap to obtain an SNF of an OTDOA reference cell before the measurement gap is requested to perform reference signal time difference (RSTD) measurement.

Herein, the RSTD may be defined based on a smallest relative time difference between boundaries of two subframes received respectively from a reference cell and a measurement cell. That is, the RSTD may be calculated based on a relative time difference between a start time of a subframe received from the measurement cell and a start time of a subframe of a reference cell closest to the start time of the subframe received from the measurement cell. Meanwhile, the reference cell may be selected by the UE.

For correct OTDOA measurement, it may be necessary to measure a time of arrival (TOA) of a signal received from three or more TPs or BSs geometrically distributed. For example, a TOA may be measured for each of a TP1, a TP2, and a TP3, and RSTD for TP 1-TP 2, RSTD for TP 2-TP 3, and RSTD for TP 3-TP 1 may be calculated for the three TOAs. Based on this, a geometric hyperbola may be determined, and a point at which these hyperbolas intersect may be estimated as a location of a UE. In this case, since accuracy and/or uncertainty for each TOA measurement may be present, the estimated location of the UE may be known as a specific range based on measurement uncertainty.

For example, RSTD for two TPs may be calculated based on Equation 1.

[Equation 1]

$$RSTDi, 1 = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1)$$

Herein, c may be the speed of light, {xt, yt} may be a (unknown) coordinate of a target UE, {xi, yi} may be a coordinate of a (known) TP, and {x1, y1} may be a coordinate of a reference TP (or another TP). Herein, (Ti-T1) may be referred to as "real time differences (RTDs)" as a transmission time offset between two TPs, and ni, n1 may represent values related to UE TOA measurement errors.

(2) E-CID (Enhanced Cell ID)

In a cell ID (CID) positioning method, a location of a UE may be measured through geometric information of a serving ng-eNB, serving gNB, and/or serving cell of the UE. For example, the geometric information of the serving ng-eNB, serving gNB, and/or serving cell may be obtained through paging, registration, or the like.

Meanwhile, in addition to the CID positioning method, an E-CID positioning method may use additional UE measurement and/or NG-RAN radio resources or the like to improve a UE location estimation value. In the E-CID positioning method, although some of the measurement methods which are the same as those used in a measurement control system of an RRC protocol may be used, additional measurement is not performed in general only for location measurement of the UE. In other words, a measurement configuration or a measurement control message may not be provided additionally to measure the location of the UE. Also, the UE may not expect that an additional measurement operation only for location measurement will be requested, and may report a measurement value obtained through measurement methods in which the UE can perform measurement in a general manner.

For example, the serving gNB may use an E-UTRA measurement value provided from the UE to implement the E-CID positioning method.

Examples of a measurement element that can be used for E-CID positioning may be as follows.

- UE measurement: E-UTRA reference signal received power (RSRP), E-UTRA reference signal received quality (RSRQ), UE E-UTRA Rx-Tx Time difference, GSM EDGE random access network (GERAN)/WLAN reference signal strength indication (RSSI), UTRAN common pilot channel (CPICH) received signal code power (RSCP), UTRAN CPICH Ec/Io
- E-UTRAN measurement: ng-eNB Rx-Tx Time difference, timing advance (TADV), angle of arrival (AoA)

Herein, the TADV may be classified into Type 1 and Type 2 as follows.

TADV Type 1 = (ng-eNB Rx-Tx time difference)+(UE E-UTRA Rx-Tx time difference)

TADV Type 2 = ng-eNB Rx-Tx time difference

Meanwhile, AoA may be used to measure a direction of the UE. The AoA may be defined as an estimation angle with respect to the location of the UE counterclockwise from a BS/TP. In this case, a geographic reference direction may be north. The BS/TP may use an uplink signal such as a sounding reference signal (SRS) and/or a demodulation reference signal (DMRS) for AoA measurement. In addition, the larger the arrangement of the antenna array, the higher the measurement accuracy of the AoA. When the antenna arrays are arranged with the same interval, signals received from adjacent antenna elements may have a constant phase-rotate.

### (3) UTDOA (Uplink Time Difference of Arrival)

UTDOA is a method of determining a location of a UE by estimating an arrival time of SRS. When calculating an estimated SRS arrival time, the location of the UE may be estimated through an arrival time difference with respect to another cell (or BS/TP) by using a serving cell as a reference cell. In order to implement the UTDOA, E-SMLC may indicate a serving cell of a target UE to indicate SRS transmission to the target UE. In addition, the E-SMLC may provide a configuration such as whether the SRS is periodical/aperiodical, a bandwidth, frequency/group/sequence hopping, or the like.

### (4) RTT (Round Trip Time)

RTT is a positioning technique that can measure the distance between two entities even if the target entity and the server entity are out of time synchronization. If RTT is performed with multiple server entities, the distance from each server entity can be measured separately. Then, by drawing a circle using the measured distance from each server entity, absolute positioning of the target entity can be performed by the point where the circles intersect.

The method of performing RTT between two entities can be performed as follows. Entity #1 may transmit PRS #1 at t1, and Entity #2 may receive the RRS #1 at t2. After the PRS #1 is received by the Entity #2, Entity #2 can transmit PRS #2 at t3, and Entity #1 can receive the PRS #2 at t4. In this case, the distance D between the two entities can be obtained as follows.

$$D = c \times \{(t4 - t1) - (t3 - t2)\} / 2 \text{ (where c is the speed of light)}$$

For RTT between UE and gNB, the distance between UE and gNB can be found based on the above formula using the UE Rx - Tx time difference and gNB Rx - Tx time difference in the table below.

### (5) Double-side RTT

The double-side RTT is a positioning technology that can measure the distance between two entities even when there is a sampling clock frequency offset between the target entity and the server entity.

The method performing the double-side RTT between two entities is as follows.

The double-side RTT is widely used in ultra-wideband (UWB) positioning and may reduce the impact of clock errors.

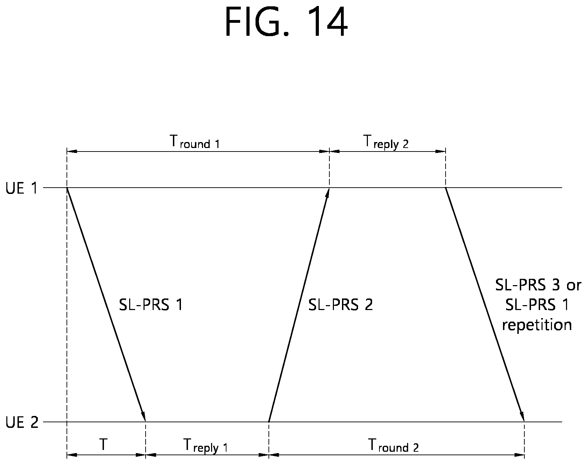

FIG. 14 is a drawing for explaining a double-side round trip time (RTT), based on an embodiment of the present disclosure. The embodiment of FIG. 14 may be combined with various embodiments of the present disclosure.

Meanwhile, propagation delay $T(T^{\wedge})$ of FIG. 14 may be estimated by two measurements (e.g., $T_{round1}$, $T_{round2}$, $T_{reply1}$, Treply2).

For example, the propagation delay $T(T^{\wedge})$ may be estimated based on Equation 2.

[Equation 2]

$$\hat{T} = \frac{1}{2}\left(T_{round1} - T_{reply1}\right)$$

For example, the propagation delay $T(T^{\wedge})$ may be estimated based on Equation 3.

[Equation 3]

$$\hat{T} = \frac{1}{2}\left(T_{round2} - T_{reply2}\right)$$

And, $T_{round1} \times T_{round2} - T_{reply1} \times T_{reply2}$ may be obtained based on Equation 4.

[Equation 4]

$$T_{round1} \times T_{round2} - T_{reply1} \times T_{reply2}$$

$$= 4\hat{T}^2 + 2\hat{T}\left(T_{reply1} + T_{reply2}\right) = \hat{T}\left(T_{round1} + T_{round2} + T_{reply1} + T_{reply2}\right)$$

Here, Equation 4 may be the same as Equation 5.

[Equation 5]

$$T_{round1} \times T_{round2} = \left(2\hat{T} + T_{reply1}\right)\left(2\hat{T} + T_{reply2}\right)$$

$$= 4\hat{T}^2 + 2\hat{T}\left(T_{reply1} + T_{reply2}\right) + T_{reply1} \times T_{reply2}$$

Accordingly, the propagation delay T(T^) may be estimated as Equation 6.

[Equation 6]

$$\hat{T} = \frac{T_{round1} \times T_{round2} - T_{reply1} \times T_{reply2}}{\left(T_{round1} + T_{round2} + T_{reply1} + T_{reply2}\right)}$$

In this case, the propagation delay estimation error due to clock error can be obtained based on Equation 7.

[Equation 7]

$$error = \hat{T} - T \approx \frac{(e_{UE1} + e_{UE2})}{2}\hat{T}$$

Here, $e_{UE1}$ and $e_{UE2}$ may be clock offsets of UE1 and UE2.
Propagation delay T(T^) may be the estimated propagation delay between UE1 and UE2.
Table 8 shows an example of reference signal time difference (RSTD). The RSTD of Table 8 may be applied for SL positioning.

[Table 8]

| Definition | The relative timing difference between the E-UTRA neighbour cell j and the E-UTRA reference cell i, defined as $T_{SubframeRxj}$ - $T_{SubframeRxi}$, where: $T_{SubframeRxj}$ is the time when the UE receives the start of one subframe from E-UTRA cell j $T_{SubframeRxi}$ is the time when the UE receives the corresponding start of one subframe from E-UTRA cell i that is closest in time to the subframe received from E-UTRA cell j. The reference point for the observed subframe time difference shall be the antenna connector of the UE. |
|---|---|
| Applicable for | RRC_CONNECTED inter-RAT |

Table 9 shows an example of DL PRS reference signal received power (RSRP). The DL PRS RSRP of Table 9 may be applied for SL positioning.

[Table 9]

| Definition | DL PRS reference signal received power (DL PRS-RSRP), is defined as the linear average over the power contributions (in [W]) of the resource elements that carry DL PRS reference signals configured for RSRP measurements within the considered measurement frequency bandwidth. For frequency range 1, the reference point for the DL PRS-RSRP shall be the antenna connector of the UE. For frequency range 2, DL PRS-RSRP shall be measured based on the combined signal from antenna elements corresponding to a given receiver branch. For frequency range 1 and 2, if receiver diversity is in use by the UE, the reported DL PRS-RSRP value shall not be lower than the corresponding DL PRS-RSRP of any of the individual receiver branches. |
|---|---|
| Applicable for | RRC_CONNECTED intra-frequency, RRC_CONNECTED inter-frequency |

Table 10 shows an example of DL relative signal time difference (RSTD). The DL RSTD of Table 10 may be applied for SL positioning.

[Table 10]

| Definition | DL relative timing difference (DL RSTD) between the positioning node *j* and the reference positioning node *i*, is defined as $T_{SubframeRxj}$ - $T_{SubframeRxi}$, Where: $T_{SubfrmeRxj}$ is the time when the UE receives the start of one subframe from positioning node *j*. $T_{SubframeRxi}$ is the time when the UE receives the corresponding start of one subframe from positioning node *i* that is closest in time to the subframe received from positioning node *j*. Multiple DL PRS resources can be used to determine the start of one subframe from a positioning node. For frequency range 1, the reference point for the DL RSTD shall be the antenna connector of the UE. For frequency range 2, the reference point for the DL RSTD shall be the antenna of the UE. |
|---|---|
| Applicable for | RRC _CONNECTED intra-frequency<br>RRC_CONNECTED inter-frequency |

Table 11 shows an example of UE Rx-Tx time difference. The UE Rx-Tx time difference of Table 11 may be applied for SL positioning.

[Table 11]

| Definition | The UE Rx - Tx time difference is defined as $T_{UE-RX}$ - $T_{UE-TX}$ Where: $T_{UE-RX}$ is the UE received timing of downlink subframe #*i* from a positioning node, defined by the first detected path in time. $T_{UE-TX}$ is the UE transmit timing of uplink subframe #*j* that is closest in time to the subframe #*i* received from the positioning node. Multiple DL PRS resources can be used to determine the start of one subframe of the first arrival path of the positioning node. For frequency range 1, the reference point for $T_{UE-RX}$ measurement shall be the Rx antenna connector of the UE and the reference point for $T_{UE-TX}$ measurement shall be the Tx antenna connector of the UE. For frequency range 2, the reference point for $T_{UE-RX}$ measurement shall be the Rx antenna of the UE and the reference point for $T_{UE-TX}$ measurement shall be the Tx antenna of the UE. |
|---|---|
| Applicable for | RRC _CONNECTED intra-frequency<br>RRC_CONNECTED inter-frequency |

Table 12 shows an example of UL Relative Time of Arrival (UL RTOA) (TUL-RTOA). The UL RTOA of Table 12 may be applied for SL positioning.

[Table 12]

| Definition | [The UL Relative Time of Arrival ($T_{UL-RTOA}$) is the beginning of subframe *i* containing SRS received in positioning node *j*, relative to the configurable reference time.] Multiple SRS resources for positioning can be used to determine the beginning of one subframe containing SRS received at a positioning node. The reference point for $T_{UL-RTOA}$ shall be:<br>- for type 1-C base station TS 38.104 [9]: the Rx antenna connector,<br>   - for type 1-O or 2-O base station TS 38.104 [9]: the Rx antenna,<br>   - for type 1-H base station TS 38.104 [9]: the Rx Transceiver Array Boundary connector. |
|---|---|

Table 13 shows an example of gNB Rx-Tx time difference. The gNB Rx-Tx time difference of Table 13 may be applied for SL positioning.

[Table 13]

| Definition | The gNB Rx - Tx time difference is defined as $T_{gNB-RX} - T_{gNB-TX}$ <br> Where: <br> $T_{gNB-RX}$ is the positioning node received timing of uplink subframe #*i* containing SRS associated with UE, defined by the first detected path in time. <br> $T_{gNB-TX}$ is the positioning node transmit timing of downlink subframe #*j* that is closest in time to the subframe #*i* received from the UE. <br> Multiple SRS resources for positioning can be used to determine the start of one subframe containing SRS. <br> The reference point for $T_{gNB-RX}$ shall be: <br>   - for type 1-C base station TS 38.104 [9]: the Rx antenna connector, <br>   - for type 1-O or 2-O base station TS 38.104 [9]: the Rx antenna, <br>   - for type 1-H base station TS 38.104 [9]: the Rx Transceiver Array Boundary connector. <br> The reference point for $T_{gNB-TX}$ shall be: <br>   - for type 1-C base station TS 38.104 [9]: the Tx antenna connector, <br>   - for type 1-O or 2-O base station TS 38.104 [9]: the Tx antenna, <br> - for type 1-H base station TS 38.104 [9]: the Tx Transceiver Array Boundary connector. |
|---|---|

Table 14 shows an example of UL Angle of Arrival (AoA). The UL AoA of Table 14 may be applied for SL positioning.

[Table 14]

| Definition | UL Angle of Arrival (UL AoA) is defined as the estimated azimuth angle and vertical angle of a UE with respect to a reference direction, wherein the reference direction is defined: <br> - In the global coordinate system (GCS), wherein estimated azimuth angle is measured relative to geographical North and is positive in a counter-clockwise direction and estimated vertical angle is measured relative to zenith and positive to horizontal direction <br> - In the local coordinate system (LCS), wherein estimated azimuth angle is measured relative to x-axis of LCS and positive in a counter-clockwise direction and estimated vertical angle is measured relatize to z-axis of LCS and positive to x-y plane direction. The bearing, downtilt and slant angles of LCS are defined according to TS 38.901 [14]. <br> The UL AoA is determined at the gNB antenna for an UL channel corresponding to this UE. |
|---|---|

Table 15 shows an example of UL SRS reference signal received power (RSRP). The UL SRS RSRP of Table 15 may be applied for SL positioning.

[Table 15]

| Definition | UL SRS reference signal received power (UL SRS-RSRP) is defined as linear average of the power contributions (in [W]) of the resource elements carrying sounding reference signals (SRS). UL SRS-RSRP shall be measured over the configured resource elements within the considered measurement frequency bandwidth in the configured measurement time occasions. <br> For frequency range 1, the reference point for the UL SRS-RSRP shall be the antenna connector of the gNB. For frequency range 2, UL SRS-RSRP shall be measured based on the combined signal from antenna elements corresponding to a given receiver branch. For frequency range 1 and 2, if receiver diversity is in use by the gNB, the reported UL SRS-RSRP value shall not be lower than the corresponding UL SRS-RSRP of any of the individual receiver branches. |
|---|---|

The following describes the UE procedure for determining the subset of resources to be reported to the higher layer in PSSCH resource selection in sidelink resource allocation mode 2.

In resource allocation mode 2, the higher layer may request the UE to determine a subset of resources from which the higher layer will select resources for PSSCH/PSCCH transmission. To trigger this procedure, in slot n, the higher layer shall provide the following parameters for the PSSCH/PSCCH transmission.

- The resource pool to which the resource will be reported;
- L1 priority, $prio_{TX}$;
- Remaining packet delay budget (PDB);
- Number of subchannels to be used for PSSCH/PSCCH transmission within the slot, $L_{subCH}$;
- Optionally, the resource reservation interval in msec $P_{rsvpTX}$
- If the higher layer requests the UE to determine a subset of resources to select for PSSCH/PSCCH transmission as part of a re-evaluation or pre-emption procedure, the higher layer shall provide a set of resources $(r_0, r_1, r_2, ...)$ that may be subject to re-evaluation and a set of resources $(r'_0, r'_1, r'_2, ...)$ that may be subject to pre-emption.
- It is up to the UE implementation to determine the subset of resources requested by the upper layer before or after slot $(r_i" - T_3)$. Where $r_i"$ is the slot with the smallest slot index among $(r_0, r_1, r_2, ...)$ and $(r'_0, r'_1, r'_2, ...)$, and $T_3$ is equal to $T^{SL}_{proc,1}$, where $T^{SL}_{proc,1}$ is defined as the number of slots determined based on the SCS configuration of the SL BWP, and $\mu_{SL}$ is the SCS configuration of the SL BWP.

The following higher layer parameters affect this procedure

- sl-SelectionWindowList: The internal parameter $T_{2min}$ is set to the corresponding value from the upper-layer parameter sl-SelectionWindowList for a given value of $prio_{TX}$.
- sl-Thres-RSRP-List: This higher layer parameter provides the RSRP threshold for each $(p_i, p_j)$ combination. Where $p_i$ is the value of the priority field contained in the received SCI format 1-A and $p_j$ is the priority of the transmission on the resource selected by the UE; in this procedure, $p_j = prio_{TX}$.
- sl-RS-ForSensing selects whether the UE uses PSSCH-RSRP or PSCCH-RSRP measurements.
- sl-ResourceReservePeriodList
- sl-SensingWindow: The internal parameter $T_0$ is defined as the number of slots corresponding to sl-SensingWindow msec.
- sl-TxPercentageList: The internal parameter X for a given $prio_{TX}$ is defined as sl-TxPercentageList($prio_{TX}$) converted from percentage to ratio.
- sl-PreemptionEnable: If sl-PreemptionEnable is provided and is not equal to 'enabled', the internal parameter $prio_{pre}$ is set to the parameter sl-PreemptionEnable provided by the upper layer.

If a resource reservation interval $P_{rsvp\_TX}$ is provided, the resource reservation interval is converted from msec units to logical slot units $P'_{rsvp\_TX}$.

Notation:

$(t'^{SL}_0, t'^{SL}_1, t'^{SL}_2, ...)$ denotes the set of slots belonging to the sidelink resource pool.

For example, the UE may select a set $(S_A)$ of candidate resources based on Table 16. For example, when resource (re)selection is triggered, the UE may select a set $(S_A)$ of candidate resources based on Table 16. For example, if re-evaluation or pre-emption is triggered, the UE may select a set of candidate resources $(S_A)$ based on Table 16.

[Table 16]

The following steps are used:

1) A candidate single-slot resource for transmission $R_{x,y}$ is defined as a set of $L_{subCH}$ contiguous sub-channels with sub-channel $x+j$ in slot $t'^{SL}_y$ where $j = 0,..., L_{subCH} - 1$. The UE shall assume that any set of $L_{subCH}$ contiguous sub-channels included in the corresponding resource pool within the time interval $[n + T_1, n + T_2]$ correspond to one candidate single-slot resource, where

- selection of $T_1$ is up to UE implementation under $0 \le T_1 \le T^{SL}_{proc,1}$, where $T^{SL}_{proc,1}$ is defined in slots in Table 8.1.4-2 where $\mu_{SL}$ is the SCS configuration of the SL BWP;

- if $T_{2min}$ is shorter than the remaining packet delay budget (in slots) then $T_2$ is up to UE implementation subject to $T_{2min} \le T_2 \le$ remaining packet delay budget (in slots); otherwise $T_2$ is set to the remaining packet delay budget (in slots).

The total number of candidate single-slot resources is denoted by $M_{total}$.

(continued)

2) The sensing window is defined by the range of slots $[n - T_0, n - T_{proc,0}^{SL})$ where $T_0$ is defined above and $T_{proc,0}^{SL}$ is defined in slots in Table 8.1.4-1 where $\mu_{SL}$ is the SCS configuration of the SL BWP. The UE shall monitor slots which belongs to a sidelink resource pool within the sensing window except for those in which its own transmissions occur. The UE shall perform the behaviour in the following steps based on PSCCH decoded and RSRP measured in these slots.

3) The internal parameter $Th(p_i, p_j)$ is set to the corresponding value of RSRP threshold indicated by the $i$-th field in *sl-Thres-RSRP-List*, where $i = p_i + (p_j - 1) * 8$.

4) The set $S_A$ is initialized to the set of all the candidate single-slot resources.

5) The UE shall exclude any candidate single-slot resource $R_{x,y}$ from the set $S_A$ if it meets all the following conditions:

- the UE has not monitored slot $t'^{SL}_m$ in Step 2.

- for any periodicity value allowed by the higher layer parameter *sl-ResourceReservePeriodList* and a hypothetical SCI format 1-A received in slot $t'^{SL}_m$ with *'Resource reservation period'* field set to that periodicity value and indicating all subchannels of the resource pool in this slot, condition c in step 6 would be met.

5a) If the number of candidate single-slot resources $R_{x,y}$ remaining in the set $S_A$ is smaller than $X \cdot M_{total}$, the set $S_A$ is initialized to the set of all the candidate single-slot resources as in step 4.

6) The UE shall exclude any candidate single-slot resource $R_{x,y}$ from the set $S_A$ if it meets all the following conditions:

a) the UE receives an SCI format 1-A in slot $t'^{SL}_m$, and *'Resource reservation period'* field, if present, and *'Priority'* field in the received SCI format 1-A indicate the values $P_{rsvp\_RX}$ and $prio_{RX}$, respectively according to Clause 16.4 in [6, TS 38.213];

b) the RSRP measurement performed, according to clause 8.4.2.1 for the received SCI format 1-A, is higher than $Th(prio_{RX}, prio_{TX})$;

c) the SCI format received in slot $t'^{SL}_m$ or the same SCI format which, if and only if the *'Resource reservation period'* field is present in the received SCI format 1-A, is assumed to be received in slot(s) $t'^{SL}_{m+q \times P'_{rsvp\_RX}}$ determines according to clause 8.1.5 the set of resource blocks and slots which overlaps with $R_{x,y+j \times P'_{rsvp\_TX}}$ for $q=1, 2, ..., Q$ and $j=0, 1, ..., C_{resel}$ - 1. Here, $P'_{rsvp\_RX}$ is $P_{rsvp\_RX}$ converted to units of logical slots according to clause 8.1.7, $Q = \left\lceil \frac{T_{scal}}{P_{rsvp\_RX}} \right\rceil$ if

$P_{rsvp\_RX} < T_{scal}$ and $n' - m \leq P'_{rsvp\_RX}$, where $t'^{SL}_{n'} = n$ if slot $n$ belongs to the set $(t'^{SL}_0, t'^{SL}_1, ..., t'^{SL}_{T'_{max}-1})$, otherwise slot $t'^{SL}_{n'}$ is the first slot after slot $n$ belonging to the set $(t'^{SL}_0, t'^{SL}_1, ..., t'^{SL}_{T'_{max}-1})$; otherwise $Q = 1$. $T_{scal}$ is set to selection window size $T_2$ converted to units of msec.

7) If the number of candidate single-slot resources remaining in the set $S_A$ is smaller than $X \cdot M_{total}$, then $Th(p_i, p_j)$ is increased by 3 dB for each priority value $Th(p_i, p_j)$ and the procedure continues with step 4.

The UE shall report set $S_A$ to higher layers.

If a resource $r_i$ from the set $(r_0, r_1, r_2, ...)$ is not a member of $S_A$, then the UE shall report re-evaluation of the resource $r_i$ to higher layers.

If a resource $r'_i$ from the set $(r'_0, r'_1, r'_2, ...)$ meets the conditions below then the UE shall report pre-emption of the resource $r'_i$ to higher layers

- $r'_i$ is not a member of $S_A$, and

- $r'_i$ meets the conditions for exclusion in step 6, with $Th(prio_{RX}, prio_{TX})$ set to the final threshold after executing steps 1)-7), i.e. including all necessary increments for reaching $X \cdot M_{total}$, and

- the associated priority $prio_{RX}$, satisfies one of the following conditions:

- *sl-PreemptionEnable* is provided and is equal to 'enabled' and $prio_{TX} > prio_{RX}$

- *sl-PreemptionEnable* is provided and is not equal to 'enabled', and $prio_{RX} < prio_{pre}$ and $prio_{TX} > prio_{RX}$

Table 17 shows a description of the NR-DL-PRS-AssistanceData field. The description of the NR-DL-PRS-AssistanceData field may be applied for a SL positioning.

[Table 17]

| nr-DL-PRS-ReferenceInfo | This field specifies the IDs of the assistance data reference TRP. |
|---|---|
| nr-DL-PRS-AssistanceDataList | This field specifies the DL-PRS resources for each frequency layer. |
| nr-SSB-Config | This field specifies the SSB configuration of the TRPs. |
| nr-DL-PRS-PositioningFrequency Layer | This field specifies the Positioning Frequency Layer for the nr-DL-PRS AssistanceDataPerFreq field. |
| nr-DL-PRS-AssistanceDataPerFreq | This field specifies the Positioning Frequency Layer for the nr-DL-PRS AssistanceDataPerFreq field. |
| dl-PRS-ID | This field is used along with a DL-PRS Resource Set ID and a DL-PRS Resource ID to uniquely identify a DL-PRS Resource, and is associated with a single TRP. |
| nr-PhysCellID | This field specifies the physical cell identity of the TRP. When the field prs-OnlyTP is included, this field is not included. |
| nr-CellGlobalID | This field specifies the NCGI, the globally unique identity of a cell in NR, as defined in TS 38.331 [35]. When the field prs-OnlyTP is included, this field is not included. |
| nr-ARFCN | This field specifies the NR-ARFCN of the TRP's CD-SSB (as defined in TS 38.300 [47]) corresponding to nr-PhysCellID. When the field prs-OnlyTP is included, this field is not included. |

Table 18 shows a description of the NR-DL-PRS-Info field. The description of the NR-DL-PRS-Info field in Table 18 may be applied for SL positioning.

[Table 18]

| nr-DL-PRS-ResourceSetID | This field specifies the DL-PRS Resource Set ID, which is used to identify the DL-PRS Resource Set of the TRP across all the frequency layers. |
|---|---|
| dl-PRS-Periodicity-and-Resource-SetSlotOffset | This field specifies the periodicity of DL-PRS allocation in slots configured per DL-PRS Resource Set and the slot offset with respect to SFN #0 slot #0 for a TRP where the DL-PRS Resource Set is configured (i.e. slot where the first DL-PRS Resource of DL-PRS Resource Set occurs). |
| dl-PRS-ResourceRepetitionFactor | This field specifies how many times each DL-PRS Resource is repeated for a single instance of the DL-PRS Resource Set. It is applied to all resources of the DL-PRS Resource Set. Enumerated values n2, n4, n6, n8, n16, n32 correspond to 2, 4, 6, 8, 16, 32 resource repetitions, respectively. If this field is absent, the value for dl-PRS-ResourceRepetitionFactor is 1 (i.e., no resource repetition). |
| dl-PRS-ResourceTimeGap | This field specifies the offset in units of slots between two repeated instances of a DL-PRS Resource corresponding to the same DL-PRS Resource ID within a single instance of the DL-PRS Resource Set. The time duration spanned by one DL-PRS Resource Set containing repeated DL-PRS Resources should not exceed DL-PRS-Periodicity. |
| dl-PRS-NumSymbols | This field specifies the number of symbols per DL-PRS Resource within a slot. |
| dl-PRS-MutingOption1 | This field specifies the DL-PRS muting configuration of the TRP for the Option-1 muting, as specified in TS 38.214 [45], and comprises the following sub-fields: |

(continued)

| | |
|---|---|
| | - dl-prs-MutingBitRepetitionFactor indicates the number of consecutive instances of the DL-PRS Resource Set corresponding to a single bit of the nr-option1-muting bit map. Enumerated values n1, n2, n4, n8 correspond to 1, 2, 4, 8 consecutive instances, respectively. If this sub-field is absent, the value for dl-prs-MutingBitRepetitionFactor is n1.<br>- nr-option1-muting defines a bitmap of the time locations where the DL-PRS Resource is transmitted (value '1') or not (value '0') for a DL-PRS Resource Set, as specified in TS 38.214 [45].<br>If this field is absent, Option-1 muting is not in use for the TRP. |
| dl-PRS-MutingOption2 | This field specifies the DL-PRS muting configuration of the TRP for the Option-2 muting, as specified in TS 38.214 [45], and comprises the following sub-fields:<br>- nr-option2-muting defines a bitmap of the time locations where the DL-PRS Resource is transmitted (value '1') or not (value '0'). Each bit of the bitmap corresponds to a single repetition of the DL-PRS Resource within an instance of a DL-PRS Resource Set, as specified in TS 38.214 [45]. The size of this bitmap should be the same as the value for dl-PRS-ResourceRepetitionFactor.<br>If this field is absent, Option-2 muting is not in use for the TRP. |
| dl-PRS-ResourcePower | This field specifies the average EPRE of the resources elements that carry the PRS in dBm that is used for PRS transmission. The UE assumes constant EPRE is used for all REs of a given DL-PRS resource. |
| dl-PRS-SequenceID | This field specifies the sequence Id used to initialize cinit value used in pseudo random generator TS 38.211 [41], clause 5.2.1 for generation of DL-PRS sequence for transmission on a given DL-PRS Resource. |
| dl-PRS-CombSizeN-AndReOffset | This field specifies the Resource Element spacing in each symbol of the DL-PRS Resource and the Resource Element (RE) offset in the frequency domain for the first symbol in a DL-PRS Resource. All DL-PRS Resource Sets belonging to the same Positioning Frequency Layer have the same value of comb size. The relative RE offsets of following symbols are defined relative to the RE Offset in the frequency domain of the first symbol in the DL-PRS Resource according to TS 38.211 [41]. The comb size configuration should be aligned with the comb size configuration for the frequency layer. |
| dl-PRS-ResourceSlotOffset | This field specifies the starting slot of the DL-PRS Resource with respect to the corresponding DL-PRS-Resource Set Slot Offset. |
| dl-PRS-ResourceSymbolOffset | This field specifies the starting symbol of the DL-PRS Resource within a slot determined by dl-PRS-ResourceSlotOffset. |
| dl-PRS-QCL-Info | This field specifies the QCL indication with other DL reference signals for serving and neighbouring cells and comprises the following subfields:<br>- ssb indicates the SSB information for QCL source and comprises the following sub-fields:<br>- pci specifies the physical cell ID of the cell with the SSB that is configured as the source reference signal for the DL-PRS. The UE obtains the SSB configuration for the SSB configured as source reference signal for the DL-PRS by indexing to the field nr-SSB-Config with this physical cell identity.<br>- ssb-Index indicates the index for the SSB configured as the source reference signal for the DL-PRS.<br>- rs-Type indicates the QCL type.<br>- dl-PRS indicates the PRS information for QCL source reference signal and comprises the followings sub-fields:<br>- qcl-DL-PRS-ResourceID specifies DL-PRS Resource ID of the DL-PRS resource used as the source reference signal. |

(continued)

| | |
|---|---|
| | - qcl-DL-PRS-ResourceSetID indicates the DL-PRS Resource Set ID of the DL-PRS Resource Set used as the source reference signal. |

Meanwhile, the existing SL positioning or Uu link positioning methods may not perform the positioning operation or may have a problem of deterioration in the positioning performance due to a problem such as an insufficient number of anchor nodes required to perform the positioning operation. That is, for example, according to the conventional technologies, when a UE performs SL-based positioning or Uu link-based positioning, a certain level of anchor nodes should be secured to ensure the accuracy of the SL positioning or Uu link positioning. However, for example, even if the UE smoothly performed the SL positioning or the Uu link positioning, due to the mobility of the UE, the number of anchor nodes required for performing the SL-based positioning or the Uu link-based positioning, respectively, based on the current location may be insufficient. In this case, for example, even if a new positioning method may be performed by combining the SL positioning method and the Uu link positioning method, if the new positioning method is not defined, a problem may occur in which the efficiency of the positioning or the accuracy of the positioning is not guaranteed.

In the present disclosure, in order to solve the above problems, a method and operation for performing joint positioning by combining SL positioning and Uu link positioning methods, and a device supporting the same are proposed.

In this disclosure, the following terms may be used.

- UE-triggered SL positioning: sidelink (SL) positioning where the procedure is triggered by the UE
- Base station/LMF-triggered SL positioning: SL positioning where the procedure is triggered by the base station/LMF
- UE-controlled SL positioning: SL positioning where the SL positioning group is generated by the UE
- Base station-controlled SL positioning: SL positioning where the SL positioning group is generated by the base station
- UE-based SL positioning: SL positioning where the UE position is calculated by the UE
- UE-assisted SL positioning: SL positioning where the UE position is calculated by the base station/LMF
- SL positioning group: UEs participating in SL positioning
- Target UE (T-UE): UE whose position is calculated
- Server UE (S-UE): UE that assists T-UE's SL positioning
- MG: a measurement gap where only SL PRS transmission is allowed
- MW: a measurement window where both SL data and SL PRS can be transmitted in a multiplexed way

For example, an SL PRS transmission resource may consist of an SL PRS resource set consisting of the following information.

- SL PRS resource set ID
- SL PRS resource ID list: a list of SL PRS resource IDs within the SL PRS resource set
- SL PRS resource type: it may be configured as periodic, aperiodic, semi-persistent, or on-demand
- Alpha for SL PRS power control
- P0 for SL PRS power control
- Path loss reference for SL PRS power control: it may be configured as SL SSB or DL PRS or UL SRS or UL SRS for positioning or PSCCH DMRS or PSSCH DMRS or PSFCH or SL CSI RS, etc.

For example, the set of SL PRS resources may consist of a SL PRS resource comprising the following information.

- SL PRS resource ID
- SL PRS comb size: an interval between REs in which SL PRS are transmitted within a symbol
- SL PRS comb offset: a RE index where SL PRS is first transmitted in the first SL PRS symbol
- SL PRS comb cyclic shift: a cyclic shift used to generate a sequence comprising the SL PRS
- SL PRS start position: an index of the first symbol to transmit SL PRS in one slot
- Number of SL PRS symbols: the number of symbols constituting SL PRS in one slot
- Frequency domain shift: the lowest frequency position (index) where SL PRS is transmitted in the frequency domain
- SL PRS BW: a frequency bandwidth used for SL PRS transmission
- SL PRS resource type: it may be configured as periodic or aperiodic, semi-persistent or on-demand
- SL PRS periodicity: a period in the time domain between SL PRS resources, or unit of logical slot in resource pool where physical or SL PRS is transmitted
- SL PRS offset: an offset in the time domain from the reference timing to the start of the first SL PRS resource, a unit of a logical slot in a resource pool in which a physical or SL PRS is transmitted. The reference timing may be SFN=0 or DFN=0 or the time of successful reception or decoding of the RRC / MAC-CE / DCI / SCI associated with the SL PRS resource.

- SL PRS sequence ID
- SL PRS spatial relation: it may be configured as SL SSB or DL PRS or UL SRS or UL SRS for positioning or PSCCH DMRS or PSSCH DMRS or PSFCH or SL CSI RS, etc.
- SL PRS CCH: SL PRS control channel (CCH). it may signal SL PRS resource configuration information and resource location, etc.

In the case of performing both downlink (DL) positioning and sidelink (SL) positioning for positioning of a Target UE (T-UE) and performing joint positioning that utilizes the results of both positionings, the joint positioning may be performed through the following operations.

For example, the gNB/LMF may configure SL positioning configuration/parameter related to SL positioning part to the T-UE. For example, the T-UE may expect that the SL PRS configured by the gNB/LMF is determined based on the DL PRS configuration. For example, the T-UE may expect that the number of symbols of the SL PRS used for the SL positioning, comb size of the SL PRS, the number of repetitions of the SL PRS may be configured to be greater than or equal to the number of symbols of the DL PRS used for the DL positioning, comb size of the DL PRS, the number of repetitions of the DL PRS, respectively. In addition, for example, the gNB/LMF may configure a minimum number of anchor UEs to be selected for the joint positioning to the T-UE, or the minimum number of anchor UEs may be (pre-)configured to a SL resource pool related to the joint positioning. For example, the T-UE may select anchor UEs greater than or equal to the minimum number based on a reference signal received power (RSRP) of the SL PRS or control channel (CCH) RSRP related to the SL PRS. In addition, for example, the gNB/LMF may configure the RSRP minimum value related to the selection of the anchor UE to be determined for the joint positioning to the T-UE, or the minimum value may be (pre-)configured to the SL resource pool related to the joint positioning. For example, the T-UE may select anchor UE with related RSRP value is greater than or equal to the RSRP minimum value.

For example, T-UE may transmit SL PRS configuration configured by the gNB/LMF to the anchor UE(s). For example, the SL PRS configuration information may be transmitted to the anchor UE in the form of SL PRS assistance data based on a higher layer such as sidelink positioning protocol (SLPP). For example, the T-UE may transmit, to the anchor UE, resource information which transmits SL PRS. For example, when the T-UE operates in mode 1, the T-UE may receive SL PRS resource information to be transmitted by the anchor UE from the gNB/LMF and transmit it to the anchor UE. For example, when the T-UE operates in mode 2, the T-UE may transmit SL PRS resource information selected based on sensing or inter-UE coordination (IUC) from another UE to the anchor UE through an IUC message. For example, if the anchor UE operates in mode 1, the anchor UE may report the SL PRS resource information received from the T-UE to the gNB related to the anchor node, and may be allocated the final SL PRS resource. For example, if the anchor UE operates in mode 2, the anchor UE may transmit SL PRS based on the SL PRS resource transmitted by the T-UE (mode-2d), or may use it as a preferred/non-preferred resource for SL PRS transmission and consider it in selecting SL PRS resources. For example, the above operation may be limited to a case of partial coverage where the T-UE operates in network coverage (INC) and the anchor UE operates out of network coverage (OOC).

For example, the gNB/LMF may configure DL positioning configuration/parameter related to the DL positioning part to the T-UE. For example, the gNB/LMF may configure a minimum number of gNBs to be used for the joint positioning to the T-UE, or the minimum number may be (pre-)configured to the SL resource pool related to the joint positioning. For example, the T-UE may select gNBs greater than or equal to the minimum number based on a RSRP of the DL PRS or RSRP of the CCH related to the DL PRS. For example, a serving cell related to the T-UE may necessarily be included in the selected gNB set. In addition, for example, the gNB/LMF may configure RSRP minimum value related to the gNB to be used for the joint positioning to the T-UE, or the minimum value may be (pre-)configured. For example, the T-UE may select gNB with related RSRP value greater than or equal to the RSRP minimum value. For example, the RSRP value may be an RSRP value for a reference signal (RS) transmitted by the gNB, such as a synchronization signal block (SSB) transmitted by the gNB, a channel state information reference signal (CSI RS), or the DL PRS.

For example, the T-UE may perform measurement for each PRS based on DL PRS and SL PRS transmitted by the anchor UE. For example, in case of UE-assisted positioning, the T-UE may perform measurement report to the LMF. For example, if the anchor UE perform the measurement, the location information of the anchor UE may be included in the measurement report related to the SL PRS transmitted by the anchor UE. For example, when exchanging assistance data with the anchor UE, the anchor UE may transmit location information to the T-UE. For example, if a unique ID is assigned to the anchor UE (e.g., if a unique ID is assigned to the RSU), the ID may be reported.

For example, for the positioning of T-UE, when performing both Uu link positioning and SL positioning and performing joint positioning that utilizes the results of both positionings, the joint positioning may be performed through the following additional operations.

For example, if the anchor UE performs measurement based on the SL PRS transmitted by the T-UE and the positioning is a UE-assisted positioning, the anchor UE may perform measurement report to the LMF. In this case, for example, the anchor UE may report its location information to the LMF by including it into the measurement report. In addition, for example, the anchor UE performs measurement based on the SL PRS transmitted by the T-UE, and if the positioning is a UE-assisted positioning, the T-UE may perform a measurement report to the LMF. For example, the anchor UE may transmit its measurement value and location information to the T-UE. For example, the T-UE may report to the LMF including the location information of the anchor UE. For example, if a unique ID is assigned to the anchor UE (e.g., if a unique ID is assigned to the RSU), the ID may be reported. For example, the above-described operation may be limited to the case where the anchor UE is out of network coverage. For example, if the anchor UE is out of network coverage (OOC), the joint SL positioning participation for the T-UE may be rejected. For example, if the T-UE selects the anchor UE, the OOC UE may not be considered as an anchor UE, and thus may not transmit a request for the joint positioning participation.

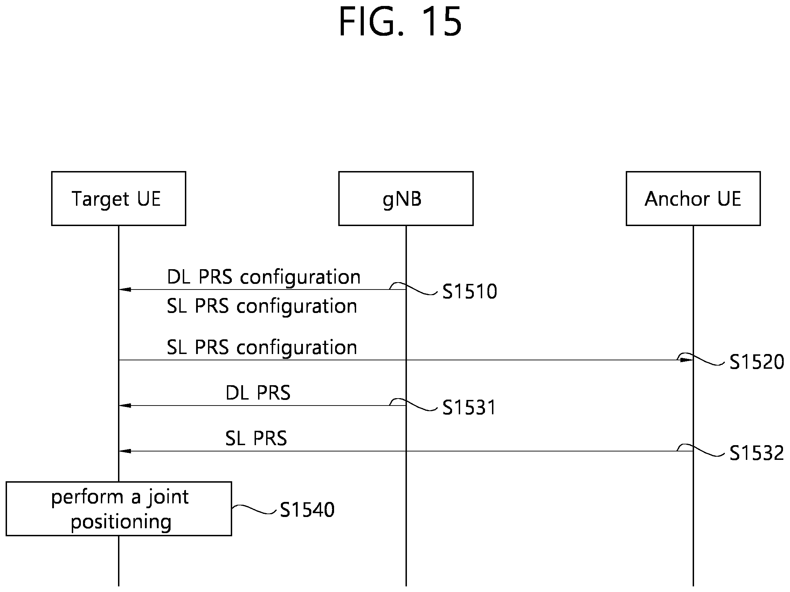

FIG. 15 shows a joint positioning operation, based on an embodiment of the present disclosure. The embodiment of FIG. 15 may be combined with various embodiments of the present disclosure.

Referring to FIG. 15, In step S1510, a target UE (T-UE) may obtain DL PRS configuration for Uu link-based positioning, and SL PRS configuration for SL-based positioning. For example, the SL PRS configuration may be configured based on the DL PRS configuration. For example, while the T-UE obtains the DL PRS configuration and the SL PRS configuration from the gNB, it can also obtain information related to the minimum number of anchor UEs for performing joint positioning. For example, information related to the minimum number of anchor UEs for performing the joint positioning may be configured in the resource pool or may be preconfigured. For example, the T-UE may select the anchor UE based on information related to the minimum number of anchor UEs for performing the joint positioning. For example, the T-UE may select the anchor UE based on the RSRP value of the SL PRS. For example, the T-UE may obtain information related to the RSRP value of the SL PRS for selecting the anchor UE from the gNB. For example, the information related to the RSRP value of the SL PRS may be configured in the resource pool or may be preconfigured. For example, the T-UE may create a group for performing joint positioning with the gNB and the selected anchor UE. For example, if the number of anchor nodes for performing Uu link-based positioning around the T-UE is insufficient due to the mobility of the T-UE, or if the number of anchor nodes for performing SL-based positioning around the T-UE is insufficient, the joint positioning that combines the Uu link-based positioning method and the SL-based positioning method may be performed. In step S1520, the T-UE may transmit the SL PRS configuration to an anchor UE selected to perform joint positioning. For example, if the anchor UE is located outside the network coverage related to the gNB and may not obtain the SL PRS configuration from the gNB, the T-UE may transmit the SL PRS configuration to the anchor UE. For example, when the T-UE transmits the SL PRS configuration to the anchor UE, the anchor UE may transmit information related to the resource of the SL PRS to be transmitted to the T-UE together. In step S1531, the T-UE may receive DL PRS from the gNB. In step S1532, the T-UE may receive SL PRS from the anchor UE. In step S1540, the T-UE may perform a measurement based on the received DL PRS, and may perform a measurement based on the received SL PRS. For example, the T-UE may perform a joint positioning based on the measurement value based on the DL PRS and the measurement value based on the SL PRS.

According to various embodiments of the present disclosure, by reflecting both the SL positioning result and the Uu link positioning result in calculating the position of the UE, the positioning performance may be improved compared to the case where only each of the positioning results is used.

Meanwhile, when forming the SL positioning group configured by the UEs involving the SL positioning and performing the SL positioning by transmitting and receiving the SL PRS within the SL positioning group, if a UE within the SL positioning group moves away from a T-UE due to movement of the UE, a problem may occur in which SL positioning performance for the T-UE deteriorates.

In the present disclosure, in order to solve the above problems, a method and operation for managing the SL positioning group including a T-UE, such as the participation of a new anchor UE and the departure of an existing anchor UE, and a device supporting the same are proposed.

For example, when the SL positioning group configured by the UEs participating in the SL positioning is updated due to the mobility of UE, etc. during the process of performing the SL positioning, the SL positioning group may be updated on the following operations.

For example, the conditions for a new anchor UE to be included in the SL positioning group or for an anchor UE that already belongs to the SL positioning group to be excluded from the SL positioning group may be as follows.

For example, if a RSRP value related to the reference signal (RS) transmitted by the anchor UE included in the SL positioning group is less than or equal to a first specific threshold value, the anchor UE may be excluded from the SL positioning group. For example, the above operation may be limited to a case that a time when the RSRP value is less than or equal to the first specific threshold value is greater than or equal to a second specific threshold value. In addition, for example, if a RSRP value related to the RS transmitted by the UE not included in the SL positioning group is greater than or equal to a third specific threshold value, the UE may be selected as a new anchor UE and be included in the SL positioning group. For example, the above operation may be limited to a case that a time when the RSRP value is greater than or equal to the third specific threshold value is greater than or equal to a fourth specific threshold value. For example, the first specific threshold value and the third specific threshold value may be the same value. For example, the second specific threshold value and the fourth specific threshold value may be the same value. For example, only if the number of anchor UEs in the SL positioning group is less than or equal to a fifth specific threshold value, the new anchor UE may be included in the SL positioning group. For example, if the number of anchor UEs in the SL positioning group is greater than or equal to the fifth specific threshold value, and if a RSRP value related to a new UE is greater than a minimum value of related RSRP value among the anchor UEs in the SL positioning group, an anchor UE having the minimum related RSRP value may be excluded and the new UE may be included as a new anchor UE of the SL positioning group. For example, the above operation may be limited to a case that the RSRP value related to the new UE is greater than or equal to the minimum RSRP value related to the existing anchor UE by a sixth specific threshold value. For example, the above operation may be limited to a case where the case that the RSRP value related to the new UE is greater than or equal to the minimum RSRP value related to the existing anchor UE by a sixth specific threshold value continues for a seventh specific threshold time or more. For example, if the number of anchor UEs participating the positioning of the T-UE is greater than or equal to a eighth specific threshold value, the SL positioning group may be created. For example, UEs having related RSRP value greater than or equal to a tenth specific threshold value during a nineth specific threshold time duration may be included as an anchor UE in the SL positioning group. For example, anchor UEs included in the SL positioning group may be updated based on the conditions at a periodic interval configured as a specific configuration value. For example, a UE may be approved to be included as an anchor UE of the SL positioning group only if the distance (e.g., distance measured based on zone) from the T-UE is within a twelfth specific threshold value during a time duration greater than or equal to a eleventh specific threshold value. For example, if a distance between anchor UE and T-UE in the SL positioning group is greater than or equal to a fourteenth specific threshold value during a time duration greater than or equal to a thirteenth specific threshold value, the anchor UE may be excluded from the SL positioning group. For example, the specific threshold values and the specific configuration values described above may be determined or configured based on QoS requirements related to the SL positioning, SL positioning accuracy requirements, latency related to the SL positioning service or SL PRS transmission, channel busy ratio (CBR) for the channel on which the SL PRS is to be transmitted, etc.

For example, when a UE participates in one or more SL positioning groups as an anchor UE or a target UE, the UE may determine whether to participate in a specific SL positioning group through the following operations.

For example, a maximum value of number of SL positioning groups that random UE can participate in simultaneously may be (pre-)configured in the resource pool performing the SL positioning. For example, if the number of SL positioning groups that the UE has participated simultaneously is greater than or equal to the maximum value, when a request to participate a new SL positioning group is received, the UE may determine whether to participate the new SL positioning group based on the RSRP value related to the T-UE within each group. For example, if a duration for which the RSRP value related to the T-UE in the new SL positioning group is greater than or equal to the RSRP value related to a T-UE in the existing SL positioning group by a fifteenth specific threshold value is greater than or equal to a sixteenth specific threshold value, the UE may leave the existing SL positioning group and participate the new SL positioning group. For example, when a request to participate one or more new SL positioning groups is received by the UE, the UE may determine whether to participate the new SL positioning group based on the SL PRS configuration being transmitted/received within the SL positioning group in which the UE is currently participating. For example, if the SL PRS comb size related to the newly requested SL positioning group is the same as the SL PRS comb size being transmitted/received within the existing participated SL positioning group, participation in the newly requested SL positioning group may be prioritized. For example, if the overlap ratio between the SL PRS pattern being transmitted/received within the existing participating SL positioning group and the SL PRS pattern related to the newly requested participating SL positioning group is less than or equal to a seventh specific threshold value, participation in the newly requested participating SL positioning group may be prioritized. For example, only if the distance (e.g., distance estimated based on zone) between the T-UE and the UE within the SL positioning group is within a nineteenth specific threshold value during a time duration greater than or equal to an eighteenth specific threshold value, the UE may participate in the SL positioning group. For example, if the distance (e.g., distance estimated based on zone) to a T-UE within the SL positioning group in which it participates during a time duration greater than or equal to a twentieth specific threshold value exceeds a twenty-first specific threshold value, the UE may exit the SL positioning group. For example, the specific threshold values and the specific configuration values described above may be determined or configured based on QoS requirements related to the SL positioning, SL positioning accuracy requirements, latency related to the SL positioning service or SL PRS transmission, CBR for the channel on which the SL PRS is to be transmitted, etc.

For example, when performing the SL positioning, the performance (e.g., accuracy) of the SL positioning may be degraded due to the mobility of the T-UE or the anchor UE. In order to solve this problem, the T-UE or the anchor UE may report the following values to the entity (e.g., the T-UE or the LMF) that calculates the position of the T-UE so that the positioning error due to the UE mobility may be corrected.

For example, the T-UE or the anchor UE may report the displacement value, the speed or the heading (the direction in which the UE intends to proceed in the future) value or the direction (the direction in which the UE is currently facing) (e.g., the heading and the direction may be different directions when the UE proceeds in a curve) value of the T-UE or the anchor UE within the SL positioning group. For example, the values may be reported at periodic intervals of specific configuration value. For example, the values may be reported within a specific threshold value compared to a previously reported time. For example, the values may be reported when the change in the values is greater than or equal to a specific threshold value. For example, it may be reported when the positioning accuracy error required for the SL positioning is less than or equal to a specific threshold value. For example, it may be reported when the reliability of the accuracy according to the SL positioning is greater than or equal to a specific threshold value.

For example, in the case described above, the uncertainty value for the SL positioning accuracy may be determined based on displacement, velocity, heading, and direction values of the T-UE or anchor UE within the SL positioning group. For example, when SL PRSs between two UEs should be exchanged, such as in SL RTT-based positioning operations, if the time interval between the 1st SL PRS and the 2nd SL PRS is long, the SL RTT positioning performance may be seriously degraded due to the mobility of the UE. For example, to solve this problem, the time interval between the 1st SL PRS and the 2nd SL PRS may be configured or selected to a value less than or equal to a specific threshold value. For example, the time interval may be configured or selected based on the displacement, velocity, heading, and direction values of the T-UE or anchor UE within the SL positioning group.

According to various embodiments of the present disclosure, when the SL positioning group needs to be updated due to mobility of a UE, the SL positioning group may be updated based on a condition for adding or removing a new UE to the SL positioning group.

For example, whether the rule is applied and/or the parameter value related to the proposed method/rule may be configured/allowed specifically (or differently or independently) for a service type. For example, whether the rule is applied and/or the parameter value related to the proposed method/rule may be configured/allowed specifically (or differently or independently) for a (LCH or service) priority. For example, whether the rule is applied and/or the parameter value related to the proposed method/rule may be configured/allowed specifically (or differently or independently) for a QoS requirement (e.g., latency, reliability, minimum communication range). For example, whether the rule is applied and/or the parameter value related to the proposed method/rule may be configured/allowed specifically (or differently or independently) for a PQI parameter. For example, whether the rule is applied and/or the parameter value related to the proposed method/rule may be configured/allowed specifically (or differently or independently) for SL HARQ feedback enabled LCH/MAC PDU (transmission). For example, whether the rule is applied and/or the parameter value related to the proposed method/rule may be configured/allowed specifically (or differently or independently) for SL HARQ feedback disabled LCH/MAC PDU (transmission). For example, whether the rule is applied and/or the parameter value related to the proposed method/rule may be configured/allowed specifically (or differently or independently) for a CBR measurement value of a resource pool. For example, whether the rule is applied and/or the parameter value related to the proposed method/rule may be configured/allowed specifically (or differently or independently) for a SL cast type (e.g., unicast, groupcast, broadcast). For example, whether the rule is applied and/or the parameter value related to the proposed method/rule may be configured/allowed specifically (or differently or independently) for a SL groupcast HARQ feedback option (e.g., NACK only feedback, ACK/NACK feedback, NACK only feedback based on TX-RX distance). For example, whether the rule is applied and/or the parameter value related to the proposed method/rule may be configured/allowed specifically (or differently or independently) for a SL mode 1 CG type (e.g., SL CG type 1 or SL CG type 2). For example, whether the rule is applied and/or the parameter value related to the proposed method/rule may be configured/allowed specifically (or differently or independently) for a SL mode type (e.g., mode 1 or mode 2). For example, whether the rule is applied and/or the parameter value related to the proposed method/rule may be configured/allowed specifically (or differently or independently) for a resource pool. For example, whether the rule is applied and/or the parameter value related to the proposed method/rule may be configured/allowed specifically (or differently or independently) for whether a PSFCH resource is configured in a resource pool. For example, whether the rule is applied and/or the parameter value related to the proposed method/rule may be configured/allowed specifically (or differently or independently) for a source (L2) ID. For example, whether the rule is applied and/or the parameter value related to the proposed method/rule may be configured/allowed specifically (or differently or independently) for a destination (L2) ID. For example, whether the rule is applied and/or the parameter value related to the proposed method/rule may be configured/allowed specifically (or differently or independently) for a PC5 RRC connection link. For example, whether the rule is applied and/or the parameter value related to the proposed method/rule may be configured/allowed specifically (or differently or independently) for a SL link. For example, whether the rule is applied and/or the parameter value related to the proposed method/rule may be configured/allowed specifically (or differently or independently) for a connection state (with a base station) (e.g., RRC CONNECTED state, IDLE state, INACTIVE state). For example, whether the rule is applied and/or the parameter value related to the proposed method/rule may be configured/allowed specifically (or differently or independently) for a SL HARQ process (ID). For example, whether the rule is applied and/or the parameter value related to the proposed method/rule may be configured/allowed specifically (or differently or independently) for whether to perform SL DRX operation (of TX UE or RX UE). For example, whether the rule is applied and/or the parameter value related to the proposed method/rule may be configured/allowed specifically (or differently or independently) for whether a UE is a power saving (TX or RX) UE. For example, whether the rule is applied and/or the parameter value related to the proposed method/rule may be configured/allowed specifically (or differently or independently) for a case in which PSFCH TX and PSFCH RX (and/or a plurality of PSFCH TXs (exceeding UE capability)) overlap (and/or a case in which PSFCH TX (and/or PSFCH RX) is skipped) (from a specific UE perspective). For example, whether the rule is applied and/or the parameter value related to the proposed method/rule may be configured/allowed specifically (or differently or independently) for a case in which the RX UE actually (successfully) receives PSCCH (and/or PSSCH) (re)transmission from the TX UE.

For example, in the present disclosure, the term "configured/configuration (or designated/designation)" can be extended/interpreted to/as that the base station informs the UE through a pre-defined (physical layer or higher layer) channel/signal (e.g., SIB, RRC, MAC CE) (and/or being provided through pre-configuration and/or that the UE informs other UEs through a pre-defined (physical layer or higher layer) channel/signal (e.g., SL MAC CE, PC5 RRC)).

For example, in the present disclosure, the term "PSFCH" can be extended/interpreted to/as (NR or LTE) PSSCH (and/or (NR or LTE) PSCCH) (and/or (NR or LTE) SL SSB (and/or UL channel/signal)). In addition, the proposed methods of the present disclosure can be used in combination with each other (as a new type of manner).

For example, in the present disclosure, the specific threshold may refer to a threshold pre-defined or (pre-)configured by a higher layer (including an application layer) of the network, the base station, or the UE. For example, in the present disclosure, the specific configured value may refer to a value pre-defined or (pre-)configured by a higher layer (including an application layer) of the network, the base station, or the UE. For example, the operation configured by the network/base station may refer to that the base station (pre-)configures to the UE through higher layer RRC signaling or the base station configures/signals to the UE through MAC CE or the base station signals to the UE through DCI.

According to various embodiments of the present disclosure, due to the mobility of a UE capable of performing SL-based positioning or Uu link-based positioning, even if the number of anchor nodes required to perform each of the SL-based positioning or the Uu link-based positioning is insufficient, the UE may perform a joint positioning that combines the SL-based positioning method and the Uu link-based positioning method. In addition, for example, the UE may generate a joint positioning group for performing the joint positioning. In addition, for example, the UE may generate the joint positioning group by selecting an anchor node greater than a certain threshold value to ensure the positioning accuracy of the joint positioning. Through this, the SL-based positioning that considers the mobility of the conventional UE may be supplemented, and the efficiency or accuracy of the positioning may be guaranteed.

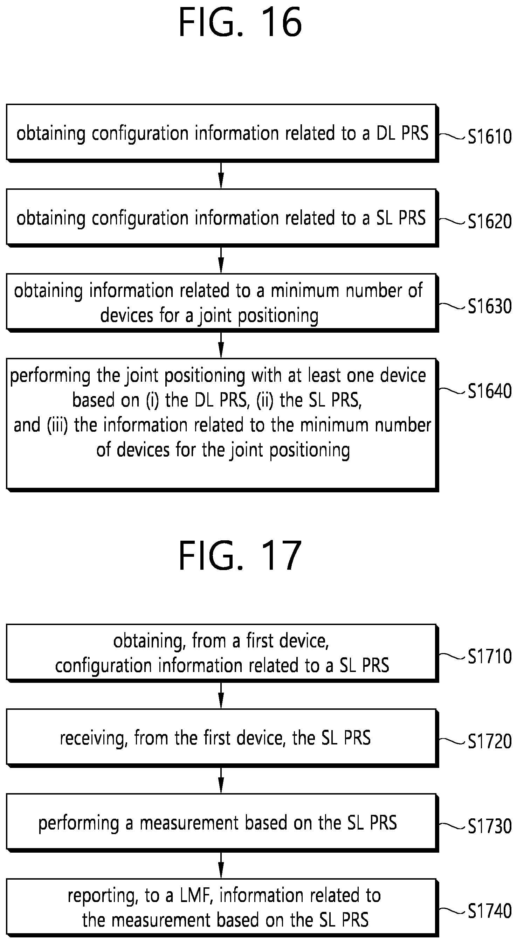

FIG. 16 shows a method for performing wireless communication by a first device, based on an embodiment of the present disclosure. The embodiment of FIG. 16 may be combined with various embodiments of the present disclosure.

Referring to FIG. 16, In step S1610, a first device may obtain configuration information related to a downlink (DL) positioning reference signal (PRS). In step S1620, the first device may obtain configuration information related to a sidelink (SL) PRS. In step S1630, the first device may obtain information related to a minimum number of devices for a joint positioning. In step S1640, the first device may perform the joint positioning with at least one device based on (i) the DL PRS, (ii) the SL PRS, and (iii) the information related to the minimum number of devices for the joint positioning.

For example, the information related to the minimum number of devices for the joint positioning may be configured by a base station or a location management function (LMF).

For example, the information related to the minimum number of devices for the joint positioning may be configured in a SL resource pool or preconfigured.

For example, the configuration information related to the SL PRS may be determined based on the configuration information related to the DL PRS.

For example, information related to at least one of a number of symbols of the SL PRS, a comb size of the SL PRS, or a number of repetitions of the SL PRS may be included in the configuration information related to the SL PRS, and information related to at least one of a number of symbols of the DL PRS, a comb size of the DL PRS, or a number of repetitions of the DL PRS may be included in the configuration information related to the DL PRS.

For example, the number of symbols of the SL PRS may be configured to be greater than or equal to the number of symbols of the DL PRS, the comb size of the SL PRS may be configured to be greater than or equal to the comb size of the DL PRS, and the number of repetitions of the SL PRS may be configured to be greater than or equal to the number of repetitions of the DL PRS.

Additionally, for example, the first device may obtain information for a minimum reference signal received power (RSRP) value related to a device for the joint positioning. For example, the at least one device may be determined based on the information for the minimum RSRP value related to the device for the joint positioning.

For example, the information for the minimum RSRP value related to the device for the joint positioning may be configured by a base station or a LMF.

For example, the information for the minimum RSRP value related to the device for the joint positioning may be configured in a SL resource pool or preconfigured.

Additionally, for example, the first device may transmit, to the at least one device for the joint positioning, the configuration information related to the SL PRS obtained from a base station or a LMF.

For example, the DL PRS may be received from a base station, the SL PRS may be received from the at least one device performing the joint positioning, and the joint positioning maybe performed based on a measurement based on the DL PRS and a measurement based on the SL PRS.

For example, location information of the at least one device may be received when exchanging assistance data with the at least one device performing the joint positioning.

For example, based on the at least one device performing the joint positioning being assigned a unique ID, the unique ID of the at least one device may be received.

The proposed method may be applied to devices according to various embodiments of the present disclosure. First, a processor 102 of a first device 100 may control a transceiver 106 to obtain configuration information related to a downlink (DL) positioning reference signal (PRS). And, the processor 102 of the first device 100 may control the transceiver 106 to obtain configuration information related to a sidelink (SL) PRS. And, the processor 102 of the first device 100 may control the transceiver 106 to obtain information related to a minimum number of devices for a joint positioning. And, the processor 102 of the first device 100 may perform the joint positioning with at least one device based on (i) the DL PRS, (ii) the SL PRS, and (iii) the information related to the minimum number of devices for the joint positioning.

According to one embodiment of the present disclosure, provided is a first device configured to perform wireless communication. The first device may comprise: at least one transceiver; at least one processor; and at least one memory connected to the at least one processor and storing instructions. For example, the instructions, based on being executed by the at least one processor, cause the first device to perform operations comprising: obtaining configuration information related to a downlink (DL) positioning reference signal (PRS); obtaining configuration information related to a sidelink (SL) PRS; obtaining information related to a minimum number of devices for a joint positioning; and performing the joint positioning with at least one device based on (i) the DL PRS, (ii) the SL PRS, and (iii) the information related to the minimum number of devices for the joint positioning.

According to one embodiment of the present disclosure, provided is a processing device configured to control a first device. The processing device may comprise: at least one processor; and at least one memory connected to the at least one processor and storing instructions. For example, the instructions, based on being executed by the at least one processor, cause the first device to perform operations comprising: obtaining configuration information related to a downlink (DL) positioning reference signal (PRS); obtaining configuration information related to a sidelink (SL) PRS; obtaining information related to a minimum number of devices for a joint positioning; and performing the joint positioning with at least one device based on (i) the DL PRS, (ii) the SL PRS, and (iii) the information related to the minimum number of devices for the joint positioning.

According to one embodiment of the present disclosure, provided is a non-transitory computer-readable storage medium recording instructions. For example, the instructions, based on being executed, cause a first device to perform operations comprising: obtaining configuration information related to a downlink (DL) positioning reference signal (PRS); obtaining configuration information related to a sidelink (SL) PRS; obtaining information related to a minimum number of devices for a joint positioning; and performing the joint positioning with at least one device based on (i) the DL PRS, (ii) the SL PRS, and (iii) the information related to the minimum number of devices for the joint positioning.

FIG. 17 shows a method for performing wireless communication by a second device, based on an embodiment of the present disclosure. The embodiment of FIG. 17 may be combined with various embodiments of the present disclosure.

Referring to FIG. 17, In step S1710, a second device may obtain, from a first device, configuration information related to a sidelink (SL) positioning reference signal (PRS). In step S1720, the second device may receive, from the first device, the SL PRS. In step S1730, the second device may perform a measurement based on the SL PRS. In step S1740, the second device may report, to a location management function (LMF), information related to the measurement based on the SL PRS. For example, the second device may be included in at least one device for a joint positioning of the first device.

The proposed method may be applied to devices according to various embodiments of the present disclosure. First, a processor 202 of a second device 200 may control a transceiver 206 to obtain, from a first device, configuration information related to a sidelink (SL) positioning reference signal (PRS). And, the processor 202 of the second device 200 may control the transceiver 206 to receive, from the first device, the SL PRS. And, the processor 202 of the second device 200 may perform a measurement based on the SL PRS. And, the processor 202 of the second device 200 may control the transceiver 206 to report, to a location management function (LMF), information related to the measurement based on the SL PRS. For example, the second device may be included in at least one device for a joint positioning of the first device.

According to one embodiment of the present disclosure, provided is a second device configured to perform wireless communication. The second device may comprise: at least one transceiver; at least one processor; and at least one memory connected to the at least one processor and storing instructions. For example, the instructions, based on being executed by the at least one processor, cause the second device to perform operations comprising: obtaining, from a first device, configuration information related to a sidelink (SL) positioning reference signal (PRS); receiving, from the first device, the SL PRS; performing a measurement based on the SL PRS; and reporting, to a location management function (LMF), information related to the measurement based on the SL PRS. For example, the second device may be included in at least one device for a joint positioning of the first device.

According to one embodiment of the present disclosure, provided is a processing device configured to control a second device. The processing device may comprise: at least one processor; and at least one memory connected to the at least one processor and storing instructions. For example, the instructions, based on being executed by the at least one processor, cause the second device to perform operations comprising: obtaining, from a first device, configuration information related to a sidelink (SL) positioning reference signal (PRS); receiving, from the first device, the SL PRS; performing a measurement based on the SL PRS; and reporting, to a location management function (LMF), information related to the measurement based on the SL PRS. For example, the second device may be included in at least one device for a joint positioning of the first device.

According to one embodiment of the present disclosure, provided is a non-transitory computer-readable storage medium recording instructions. For example, the instructions, based on being executed, cause a second device to perform operations comprising: obtaining, from a first device, configuration information related to a sidelink (SL) positioning reference signal (PRS); receiving, from the first device, the SL PRS; performing a measurement based on the SL PRS; and reporting, to a location management function (LMF), information related to the measurement based on the SL PRS. For example, the second device may be included in at least one device for a joint positioning of the first device.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

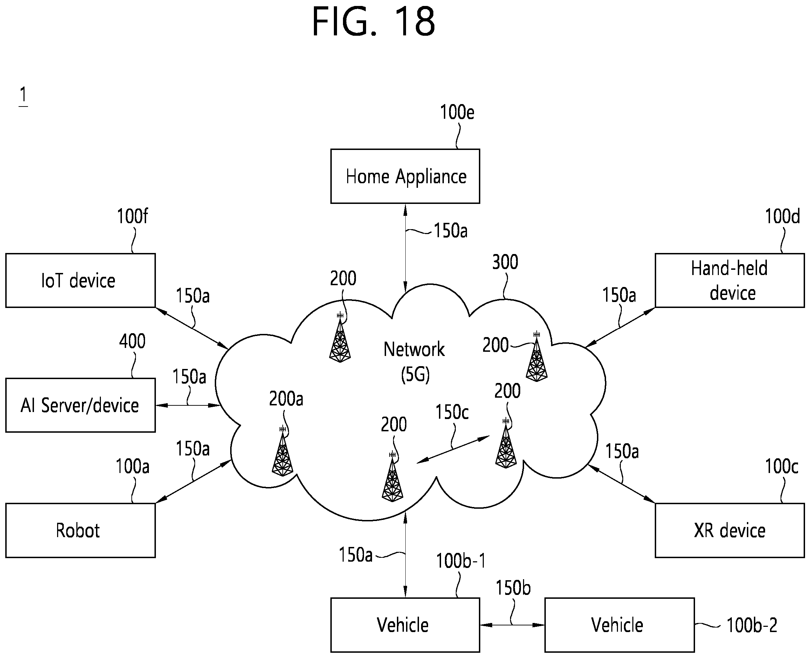

FIG. 18 shows a communication system 1, based on an embodiment of the present disclosure. The embodiment of FIG. 18 may be combined with various embodiments of the present disclosure.

Referring to FIG. 18, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

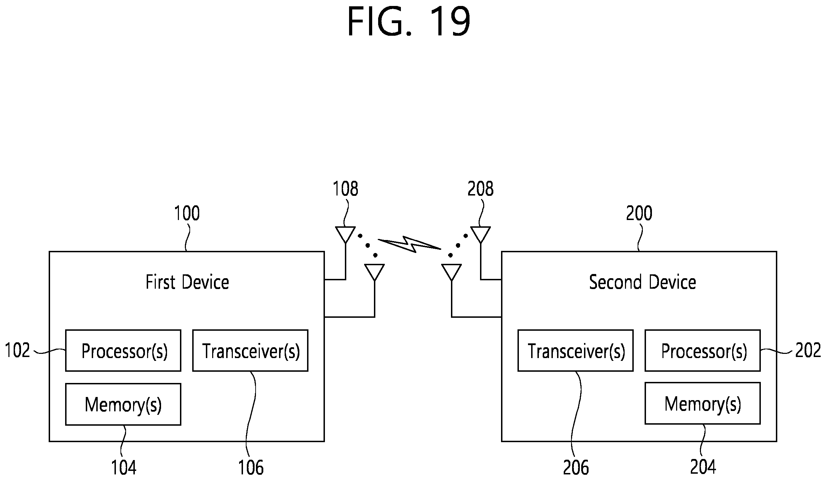

FIG. 19 shows wireless devices, based on an embodiment of the present disclosure. The embodiment of FIG. 19 may be combined with various embodiments of the present disclosure.

Referring to FIG. 19, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 18.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

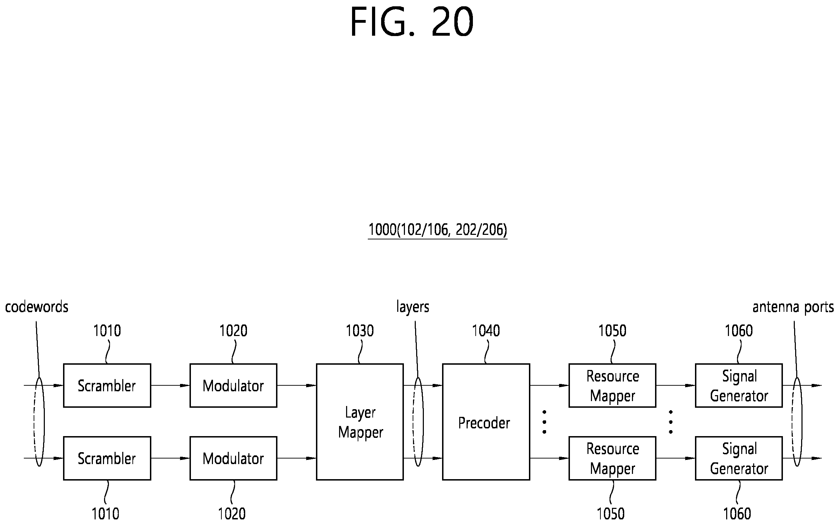

FIG. 20 shows a signal process circuit for a transmission signal, based on an embodiment of the present disclosure. The embodiment of FIG. 20 may be combined with various embodiments of the present disclosure.

Referring to FIG. 20, a signal processing circuit 1000 may include scramblers 1010, modulators 1020, a layer mapper 1030, a precoder 1040, resource mappers 1050, and signal generators 1060. An operation/function of FIG. 20 may be performed, without being limited to, the processors 102 and 202 and/or the transceivers 106 and 206 of FIG. 19. Hardware elements of FIG. 20 may be implemented by the processors 102 and 202 and/or the transceivers 106 and 206 of FIG. 19. For example, blocks 1010 to 1060 may be implemented by the processors 102 and 202 of FIG. 19. Alternatively, the blocks 1010 to 1050 may be implemented by the processors 102 and 202 of FIG. 19 and the block 1060 may be implemented by the transceivers 106 and 206 of FIG. 19.

Codewords may be converted into radio signals via the signal processing circuit 1000 of FIG. 20. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 20. For example, the wireless devices (e.g., 100 and 200 of FIG. 19) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

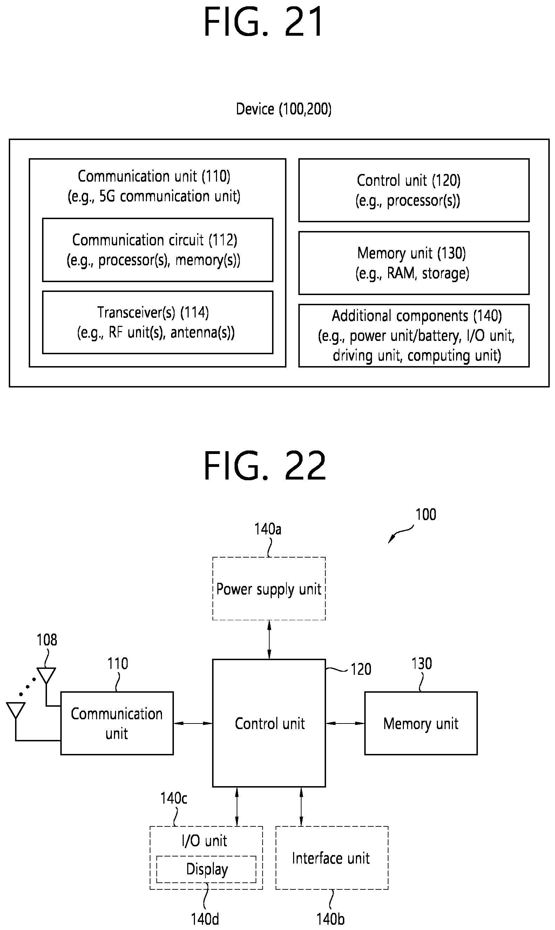

FIG. 21 shows another example of a wireless device, based on an embodiment of the present disclosure. The wireless device may be implemented in various forms according to a use-case/service (refer to FIG. 18). The embodiment of FIG. 21 may be combined with various embodiments of the present disclosure.

Referring to FIG. 21, wireless devices 100 and 200 may correspond to the wireless devices 100 and 200 of FIG. 19 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 19. For example, the transceiver(s) 114 may include the one or more transceivers 106 and 206 and/or the one or more antennas 108 and 208 of FIG. 19. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 18), the vehicles (100b-1 and 100b-2 of FIG. 18), the XR device (100c of FIG. 18), the hand-held device (100d of FIG. 18), the home appliance (100e of FIG. 18), the IoT device (100f of FIG. 18), a digital broadcast terminal, a hologram device, a public safety device, an MTC device, a medicine device, a fintech device (or a finance device), a security device, a climate/environment device, the AI server/device (400 of FIG. 18), the BSs (200 of FIG. 18), a network node, etc. The wireless device may be used in a mobile or fixed place according to a use-example/service.

In FIG. 21, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 21 will be described in detail with reference to the drawings.

FIG. 22 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 22 may be combined with various embodiments of the present disclosure.

Referring to FIG. 22, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 21, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/-signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

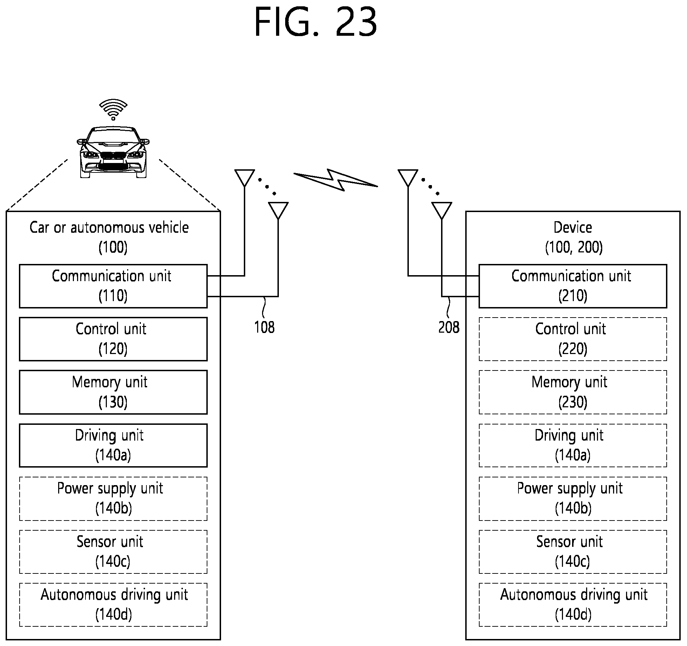

FIG. 23 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 23 may be combined with various embodiments of the present disclosure.

Referring to FIG. 23, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 21, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

**Claims**

1. A method for performing wireless communication by a first device, the method comprising:

    obtaining configuration information related to a downlink (DL) positioning reference signal (PRS);
    obtaining configuration information related to a sidelink (SL) PRS;
    obtaining information related to a minimum number of devices for a joint positioning; and
    performing the joint positioning with at least one device based on (i) the DL PRS, (ii) the SL PRS, and (iii) the information related to the minimum number of devices for the joint positioning.

2. The method of claim 1, wherein the information related to the minimum number of devices for the joint positioning is configured by a base station or a location management function (LMF).

3. The method of claim 1, wherein the information related to the minimum number of devices for the joint positioning is configured in a SL resource pool or preconfigured.

4. The method of claim 1, wherein the configuration information related to the SL PRS is determined based on the configuration information related to the DL PRS.

5. The method of claim 4, wherein information related to at least one of a number of symbols of the SL PRS, a comb size of the SL PRS, or a number of repetitions of the SL PRS is included in the configuration information related to the SL PRS, and
    wherein information related to at least one of a number of symbols of the DL PRS, a comb size of the DL PRS, or a number of repetitions of the DL PRS is included in the configuration information related to the DL PRS.

6. The method of claim 5, wherein the number of symbols of the SL PRS is configured to be greater than or equal to the number of symbols of the DL PRS,

    wherein the comb size of the SL PRS is configured to be greater than or equal to the comb size of the DL PRS, and
    wherein the number of repetitions of the SL PRS is configured to be greater than or equal to the number of repetitions of the DL PRS.

7. The method of claim 1, further comprising:

    obtaining information for a minimum reference signal received power (RSRP) value related to a device for the joint positioning,
    wherein the at least one device is determined based on the information for the minimum RSRP value related to the device for the joint positioning.

8. The method of claim 7, wherein the information for the minimum RSRP value related to the device for the joint positioning is configured by a base station or a LMF.

9. The method of claim 7, wherein the information for the minimum RSRP value related to the device for the joint positioning is configured in a SL resource pool or preconfigured.

10. The method of claim 1, further comprising:
transmitting, to the at least one device for the joint positioning, the configuration information related to the SL PRS obtained from a base station or a LMF.

11. The method of claim 1, wherein the DL PRS is received from a base station,

wherein the SL PRS is received from the at least one device performing the joint positioning, and
wherein the joint positioning is performed based on a measurement based on the DL PRS and a measurement based on the SL PRS.

12. The method of claim 1, wherein location information of the at least one device is received when exchanging assistance data with the at least one device performing the joint positioning.

13. The method of claim 1, wherein, based on the at least one device performing the joint positioning being assigned a unique ID, the unique ID of the at least one device is received.

14. A first device adapted to perform wireless communication, the first device comprising:

at least one transceiver;
at least one processor; and
at least one memory connected to the at least one processor and storing instructions that, based on being executed, cause the first device to perform operations comprising:

obtaining configuration information related to a downlink (DL) positioning reference signal (PRS);
obtaining configuration information related to a sidelink (SL) PRS;
obtaining information related to a minimum number of devices for a joint positioning; and
performing the joint positioning with at least one device based on (i) the DL PRS, (ii) the SL PRS, and (iii) the information related to the minimum number of devices for the joint positioning.

15. A processing device adapted to control a first device to perform wireless communication, the processing device comprising:

at least one processor; and
at least one memory connected to the at least one processor and storing instructions that, based on being executed, cause the at least one processor to perform operations comprising:

obtaining configuration information related to a downlink (DL) positioning reference signal (PRS);
obtaining configuration information related to a sidelink (SL) PRS;
obtaining information related to a minimum number of devices for a joint positioning; and
performing the joint positioning with at least one device based on (i) the DL PRS, (ii) the SL PRS, and (iii) the information related to the minimum number of devices for the joint positioning.

16. A non-transitory computer-readable storage medium recording instructions, the instruction, when executed, cause a first device to perform operations comprising:

obtaining configuration information related to a downlink (DL) positioning reference signal (PRS);
obtaining configuration information related to a sidelink (SL) PRS;
obtaining information related to a minimum number of devices for a joint positioning; and
performing the joint positioning with at least one device based on (i) the DL PRS, (ii) the SL PRS, and (iii) the information related to the minimum number of devices for the joint positioning.

17. A method for performing wireless communication by a second device, the method comprising:

obtaining, from a first device, configuration information related to a sidelink (SL) positioning reference signal (PRS);
receiving, from the first device, the SL PRS;
performing a measurement based on the SL PRS; and
reporting, to a location management function (LMF), information related to the measurement based on the SL PRS,

wherein the second device is included in at least one device for a joint positioning of the first device.

**18.** A second device adapted to perform wireless communication, the second device comprising:

at least one transceiver;

at least one processor; and

at least one memory connected to the at least one processor and storing instructions that, based on being executed, cause the second device to perform operations comprising:

obtaining, from a first device, configuration information related to a sidelink (SL) positioning reference signal (PRS);

receiving, from the first device, the SL PRS;

performing a measurement based on the SL PRS; and

reporting, to a location management function (LMF), information related to the measurement based on the SL PRS,

wherein the second device is included in at least one device for a joint positioning of the first device.

**19.** A processing device adapted to control a second device to perform wireless communication, the processing device comprising:

at least one processor; and

at least one memory connected to the at least one processor and storing instructions that, based on being executed, cause the at least one processor to perform operations comprising:

obtaining, from a first device, configuration information related to a sidelink (SL) positioning reference signal (PRS);

receiving, from the first device, the SL PRS;

performing a measurement based on the SL PRS; and

reporting, to a location management function (LMF), information related to the measurement based on the SL PRS,

wherein the second device is included in at least one device for a joint positioning of the first device.

**20.** A non-transitory computer-readable storage medium recording instructions, the instruction, when executed, cause a second device to perform operations comprising:

obtaining, from a first device, configuration information related to a sidelink (SL) positioning reference signal (PRS);

receiving, from the first device, the SL PRS;

performing a measurement based on the SL PRS; and

reporting, to a location management function (LMF), information related to the measurement based on the SL PRS,

wherein the second device is included in at least one device for a joint positioning of the first device.

# FIG. 1

FIG. 2

EP 4 598 169 A1

# FIG. 3

41

# FIG. 4

# FIG. 5

# FIG. 6

Resource grid

A carrier
(up to 3300 subcarriers,
i.e., 275 RBs)

A BWP

1RB=12 subcarriers

1 RE

1subcarrier

1 symbol

l=0 • • •

k=0

EP 4 598 169 A1

# FIG. 7

PRB N3

PRB 1

PRB 0

$N_{BWP, 2}^{size}$

PRB N2

PRB 1

PRB 0

$N_{BWP, 1}^{size}$

PRB N1

PRB 1

PRB 0

$N_{BWP, 0}^{size}$

CRB 0

Carrier Bandwidth

$N_{BWP, 2}^{start}$

$N_{BWP, 1}^{start}$

$N_{BWP, 0}^{start}$

Freq.

Time

PRB 0 (Point A) in reference resource block

# FIG. 8

| BS | first UE | second UE | first UE | second UE |

resource
scheduling
S800

PSCCH — S810

PSSCH — S820

PSFCH — S830

PUCCH/PUSCH — S840

(a)

PSCCH — S810

PSSCH — S820

PSFCH — S830

(b)

# FIG. 9

LTE-Uu

NR-Uu

TP

ng-eNB
(Note 1)

TP

Xn

gNB
(Note 1)

NG-RAN

UE

SET

NG-C
(Note 2)

NG-C
(Note 2)

LMF

NLs

AMF

E-SMLC

SLP

EP 4 598 169 A1

FIG. 10

# FIG. 11

EP 4 598 169 A1

# FIG. 12

| NRPPa | | | | | NRPPa |
|-------|-------|-------|-------|-------|-------|
| NGAP | | NGAP | HTTP/2 | | HTTP/2 |
| SCTP | | SCTP | TLS | | TLS |
| | | | TCP | | TCP |
| IP | | IP | IP | | IP |
| L2 | | L2 | L2 | | L2 |
| L1 | | L1 | L1 | | L1 |

NG RAN    NG-C    AMF    NLs    LMF

# FIG. 13

BS A
(anchor cell)

BS B

BS C

# FIG. 14

# FIG. 15

```
┌──────────────┐        ┌──────────────┐        ┌──────────────┐
│  Target UE   │        │     gNB      │        │  Anchor UE   │
└──────┬───────┘        └──────┬───────┘        └──────┬───────┘
       │                       │                       │
       │   DL PRS configuration│                       │
       │◄──────────────────────┤  S1510                │
       │   SL PRS configuration│                       │
       │                       │                       │
       │       SL PRS configuration                    │
       ├───────────────────────────────────────────────►  S1520
       │                       │                       │
       │        DL PRS         │                       │
       │◄──────────────────────┤  S1531                │
       │                       │                       │
       │        SL PRS         │                       │
       │◄──────────────────────────────────────────────┤  S1532
       │                       │                       │
┌──────┴───────┐               │                       │
│ perform a joint│  S1540       │                       │
│  positioning  │              │                       │
└──────┬───────┘               │                       │
       │                       │                       │
```

# FIG. 16

obtaining configuration information related to a DL PRS ~ S1610

obtaining configuration information related to a SL PRS ~ S1620

obtaining information related to a minimum number of devices for a joint positioning ~ S1630

performing the joint positioning with at least one device based on (i) the DL PRS, (ii) the SL PRS, and (iii) the information related to the minimum number of devices for the joint positioning ~ S1640

# FIG. 17

obtaining, from a first device, configuration information related to a SL PRS ~ S1710

receiving, from the first device, the SL PRS ~ S1720

performing a measurement based on the SL PRS ~ S1730

reporting, to a LMF, information related to the measurement based on the SL PRS ~ S1740

# FIG. 18

EP 4 598 169 A1

FIG. 19

# FIG. 20

1000(102/106, 202/206)

# FIG. 21

Device (100,200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 22

# FIG. 23

## INTERNATIONAL SEARCH REPORT

| International application No. |
| --- |
| **PCT/KR2023/014948** |

| A. | CLASSIFICATION OF SUBJECT MATTER |
| --- | --- |

**H04W 64/00**(2009.01)i; **H04L 5/00**(2006.01)i; **H04W 24/08**(2009.01)i; **H04W 24/10**(2009.01)i; **G01S 5/02**(2010.01)i; **H04W 92/18**(2009.01)i

According to International Patent Classification (IPC) or to both national classification and IPC

| B. | FIELDS SEARCHED |
| --- | --- |

Minimum documentation searched (classification system followed by classification symbols)

H04W 64/00(2009.01); G01S 5/02(2010.01); H04L 5/00(2006.01); H04W 24/10(2009.01); H04W 4/02(2009.01); H04W 4/46(2018.01); H04W 72/04(2009.01); H04W 8/24(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: DL PRS, SL PRS, 설정 정보(configuration information), 조인트 측위(joint positioning), 최소 개수(minimum number), LMF

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | US 2022-0077990 A1 (QUALCOMM INCORPORATED) 10 March 2022 (2022-03-10) See paragraphs [0169]-[0172]; claims 1 and 6; and figure 17. | 17-20 |
| A | | 1-16 |
| Y | US 2022-0244344 A1 (QUALCOMM INCORPORATED) 04 August 2022 (2022-08-04) See paragraphs [0162]-[0172]; claims 1 and 7; and figure 10. | 17-20 |
| A | KR 10-2021-0124454 A (DATANG MOBILE COMMUNICATIONS EQUIPMENT CO., LTD.) 14 October 2021 (2021-10-14) See paragraphs [0076]-[0117]; and figure 1. | 1-20 |
| A | WO 2021-188220 A1 (QUALCOMM INCORPORATED) 23 September 2021 (2021-09-23) See paragraphs [0129]-[0137]; and figures 11-12. | 1-20 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **08 January 2024** | **08 January 2024** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/014948** |

**C. DOCUMENTS CONSIDERED TO BE RELEVANT**

| Category* | Citation of document, with indication, where appropriate, of the relevant passages | Relevant to claim No. |
| --- | --- | --- |
| A | KR 10-2020-0084249 A (KOREA UNIVERSITY RESEARCH AND BUSINESS FOUNDATION) 10 July 2020 (2020-07-10)<br>See paragraphs [0018]-[0025]; and figure 2. | 1-20 |

Form PCT/ISA/210 (second sheet) (July 2022)

**INTERNATIONAL SEARCH REPORT**
Information on patent family members

International application No.

**PCT/KR2023/014948**

| Patent document cited in search report | | | Publication date (day/month/year) | Patent family member(s) | | | Publication date (day/month/year) |
|---|---|---|---|---|---|---|---|
| US | 2022-0077990 | A1 | 10 March 2022 | BR | 112023003397 | A2 | 11 April 2023 |
| | | | | CN | 116325985 | A | 23 June 2023 |
| | | | | EP | 4211951 | A1 | 19 July 2023 |
| | | | | KR | 10-2023-0062558 | A | 09 May 2023 |
| | | | | US | 11671224 | B2 | 06 June 2023 |
| | | | | WO | 2022-056004 | A1 | 17 March 2022 |
| US | 2022-0244344 | A1 | 04 August 2022 | CN | 116982360 | A | 31 October 2023 |
| | | | | KR | 10-2023-0136127 | A | 26 September 2023 |
| | | | | TW | 202232988 | A | 16 August 2022 |
| | | | | US | 11609299 | B2 | 21 March 2023 |
| | | | | WO | 2022-169498 | A1 | 11 August 2022 |
| KR | 10-2021-0124454 | A | 14 October 2021 | CN | 111562546 | A | 21 August 2020 |
| | | | | CN | 111562546 | B | 28 October 2022 |
| | | | | CN | 115551079 | A | 30 December 2022 |
| | | | | EP | 3926357 | A1 | 22 December 2021 |
| | | | | TW | 202031072 | A | 16 August 2020 |
| | | | | TW | I726612 | B | 01 May 2021 |
| | | | | US | 11792766 | B2 | 17 October 2023 |
| | | | | US | 2022-0150866 | A1 | 12 May 2022 |
| | | | | WO | 2020-164361 | A1 | 20 August 2020 |
| WO | 2021-188220 | A1 | 23 September 2021 | BR | 112022018116 | A2 | 25 October 2022 |
| | | | | CN | 115136674 | A | 30 September 2022 |
| | | | | EP | 4122256 | A1 | 25 January 2023 |
| | | | | JP | 2023-519116 | A | 10 May 2023 |
| | | | | KR | 10-2022-0155996 | A | 24 November 2022 |
| | | | | TW | 202137786 | A | 01 October 2021 |
| | | | | US | 2023-0056831 | A1 | 23 February 2023 |
| KR | 10-2020-0084249 | A | 10 July 2020 | None | | | |

Form PCT/ISA/210 (patent family annex) (July 2022)